# EUROPEAN PATENT SPECIFICATION

(11) **EP 2 041 150 B1**
(45) Date of publication and mention of the grant of the patent: **26.10.2011**
(21) Application number: 07765731.0
(22) Date of filing: 29.06.2007
(51) Int. Cl.: C07F 17/00, B01J 31/00, C07B 53/00, C07B 31/00

(54) **DIPHOSPHINE LIGANDS**
DIPHOSPHINLIGANDEN
LIGANDS DIPHOSPHINIQUES

(30) Priority: 30.06.2006 CH 10512006
(43) Date of publication of application: 01.04.2009
(73) Proprietor: Solvias AG, 4057 Basel (CH)
(72) Inventor: PUGIN, Benoît, CH-4142 Münchenstein (CH); FENG, Xiangdong, Qingdao, 266071 (CN); SPINDLER, Felix, CH-4656 Starrkirch-Wil (CH)
(74) Representative: Pommerenke, Alexander
(86) International application number: PCT/EP2007/056556
(87) International publication number: WO 2008/000815

(56) References cited:
- WO-A-2005/108409
- CHIFFRE, J. ET AL.: "Selective functionalization of chiral ferrocenyl acetals. Easy acces to various tr- an tetrasubstituted ferrocenes with controlled geometry" ORGANOMETALLICS, vol. 21, no. 21, 2002, pages 4552-4555, XP002455433

## Description

The present invention relates to 1-sec-phosphino-2-[(2'-sec-phosphino)hydroxybenzyl]ferrocenes having a further substituent in the 3 position of the cyclopentadienyl ring and also derivatives of these compounds, their preparation, complexes of transition metals with these ligands and the use of the metal complexes in the homogeneous, stereoselective synthesis of organic compounds.

Chiral ligands have proven to be extraordinarily important auxiliaries for catalysts in homogeneous stereoselective catalysis. The effectiveness of such catalysts frequently proves to be specific for particular substrates. To be able to achieve optimization for particular substrates, it is therefore necessary to have a sufficiently large number of chiral ligands available. There is thus a continual need for further efficient chiral ligands which are simple to prepare and give good results in stereoselective catalytic reactions. Ligands whose properties can be adapted and optimized for particular catalytic objectives are of particular interest. Ligands which can be built up in a modular fashion are particularly suitable for this purpose.

Ferrocene is a very useful skeleton for the preparation of ligands which has been used successfully for providing different substitutions with secondary phosphino radicals. WO 00/037478 describes ligands of the formula 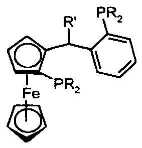 which are referred to as Taniaphos. However, their industrial importance remains small because their preparation is complicated and expensive, particularly when 2 different PR₂ groups are to be bound to the skeleton, since the two phosphino groups are introduced in one process step.

WO 2005/068477 describes the preparation of ferrocenediphosphines having a chiral P atom. For the preparation of ligands of the Taniaphos type, this document proposes firstly introducing an R'R"P- radical into a ferrocene having an ortho-directing auxiliary group in the metallation, then hydrolyzing the auxiliary group to an aldehyde group and then reacting the aldehyde group with an orthometallated sec-phosphinobenzene. The use of a hydrolyzable chiral auxiliary group makes the process expensive and uneconomical. According to WO 2005/108409, a P(III) group is used as ortho-directing chiral auxiliary group, with the product of the metallation being reacted with an o-sec-phosphinobenzaldehyde and the P(III) auxiliary group then being converted into a sec-phosphino group. This synthesis is considered to be complicated. The compounds of the formula 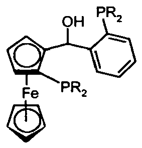 which can be obtained are referred to as Taniaphos-OH, with the Cp-PR₂ group being able to be asymmetric (Cp is cyclopentadienyl).

There is a great need for ligands of the Taniaphos-OH type which can be prepared in a simple, modular and economical way and are suitable as ligands for metal complexes in asymmetric catalysts.

It has now surprisingly been found that the preparation of optically pure isomers of the Taniaphos-OH type can be achieved particularly simply when a ferrocene in which an optionally modifiable ortho-directing chiral group is bound to one Cp ring is used as starting material. The presence of a further optical centre leads to excellent diastereoselectivities in the synthesis of bidentate ligands and additionally allows simple purification or separation of the stereoisomers by crystallization or by preparative chromatography, even on achiral columns.

Furthermore, it has surprisingly been found that these ligands, which contain a further substituent in the cyclopentadienyl ring (Cp) in the ortho position relative to the Cp-CHOH bond, have an at least about equally good effect in metal complexes for enantioselective and homogeneous catalysts as Taniaphos-OH and enable, depending on the prochiral substrate, very good to very high stereoselectivities to be achieved. The choice of this substituent makes it possible to influence the catalytic properties and to optimize them for particular substrates.

The invention firstly provides compounds of the formulae I and Ia in the form of mixtures of diastereomers or pure diastereomers, 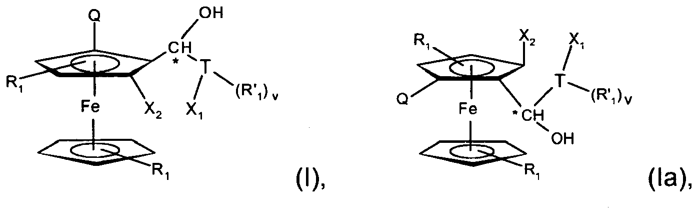 where
R₁ is a hydrogen atom or C₁-C₄-alkyl and R'₁ is C₁-C₄-alkyl;
X₁ and X₂ are each, independently of one another, a sec-phosphino group;
T is C₆-C₂₀-arylene or C₄-C₁₈-heteroarylene having heteroatoms selected from the group consisting of O, S, -N= and N(C₁-C₄-alkyl);
v is 0 or an integer from 1 to 4;
X₁ is bound in the ortho position relative to the T-C* bond;
Q is vinyl, methyl, ethyl, -CH₂-OR, -CH₂-N(C₁-C₁₂-alkyl)₂ or a C- or S-bonded chiral group which directs metals of metallation reagents into the ortho position;
R is hydrogen, a silyl radical or an aliphatic, cycloaliphatic, aromatic or aromatic-aliphatic hydrocarbon radical which has from 1 to 18 carbon atoms and is unsubstituted or substituted by C₁-C₄-alkyl, C₁-C₄-alkoxy, F or CF₃; and
* denotes a mixture of diastereomers or pure diastereomers.

Preferred compounds according to the invention are compounds of the formula Ib or Ic, 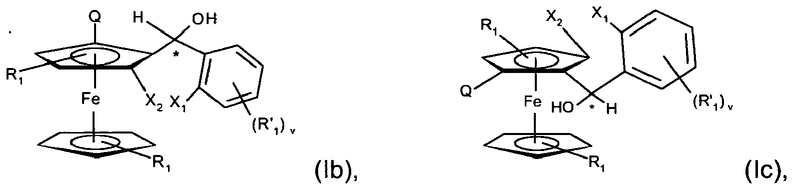 where Q, R₁, R'₁, X₁, X₂ and v and also * have the above meanings.

R₁ can be present once or twice or from one to five times in the cyclopentadienyl rings. An alkyl radical R₁ can be, for example, methyl, ethyl, n- or i-propyl, n-, i- or t-butyl, with preference being given to methyl. R₁ is preferably a hydrogen atom. R'₁ can be present from one to four times in the aromatic or heteroaromatic radical T. Preference is given to v being 0 and R'₁ thus being hydrogen.

An alkyl radical R'₁ can be, for example, methyl, ethyl, n- or i-propyl, n-, i- or t-butyl, with preference being given to methyl.

An arylene radical T preferably has from 6 to 14 carbon atoms. Examples of arylene are phenylene, naphthylene, anthracylene and phenanthrylene. Preference is given to 1,2-phenylene and 1,2-naphthylene.

A heteroarylene radical T preferably has from 4 to 14 carbon atoms and particularly preferably from 4 to 5 carbon atoms and preferably one heteroatom. Examples of heteroarylene are 1,2- or 2,3-thiophenylene, 1,2- or 2,3-furanylene and N-methyl-1,2- or -2,3-pyrrolylene and also 2,3- or 3,4-pyridinylene.

X₁ and X₂ can be secondary phosphino groups which contain identical or different hydrocarbon radicals and/or heterohydrocarbon radicals. Furthermore, X₁ and X₂ can be identical or different.

The hydrocarbon radicals can be unsubstituted or substituted and/or contain heteroatoms selected from the group consisting of O, S, -N= and N(C₁-C₄-alkyl). They can contain from 1 to 22, preferably from 1 to 12 and particularly preferably from 1 to 8, carbon atoms. A preferred sec-phosphino group is one in which the phosphino group contains two identical or different radicals selected from the group consisting of linear or branched C₁-C₁₂-alkyl; unsubstituted or C₁-C₆-alkyl- or C₁-C₆-alkoxy-substituted C₅-C₁₂-cycloalkyl or C₅-C₁₂-cycloalkyl-CH₂-; phenyl, naphthyl, furyl and benzyl; and halogen-, C₁-C₆-alkyl-, trifluoromethyl-, C₁-C₆-alkoxy-, trifluoromethoxy-, (C₆H₅)₃Si-, (C₁-C₁₂-alkyl)₃Si- or sec-amino-substituted phenyl or benzyl.

Examples of alkyl substituents on P, which preferably contain from 1 to 6 carbon atoms, are methyl, ethyl, n-propyl, i-propyl, n-butyl, i-butyl, t-butyl and the isomers of pentyl and hexyl. Examples of unsubstituted or alkyl-substituted cycloalkyl substituents on P are cyclopentyl, cyclohexyl, methylcyclohexyl and ethylcyclohexyl and dimethylcyclohexyl. Examples of alkyl- and alkoxy-substituted phenyl and benzyl substituents on P are methylphenyl, dimethylphenyl, trimethylphenyl, ethylphenyl, methylbenzyl, methoxyphenyl, dimethoxyphenyl, trimethoxyphenyl, trifluoromethylphenyl, bistrifluoromethylphenyl, tristrifluoromethylphenyl, trifluoromethoxyphenyl, bistrifluoromethoxyphenyl, fluorophenyl and chlorophenyl and 3,5-dimethyl-4-methoxyphenyl.

Preferred secondary phosphino groups are ones which have identical or different radicals selected from the group consisting of C₁-C₆-alkyl, unsubstituted cyclopentyl or cyclohexyl and cyclopentyl or cyclohexyl bearing from 1 to 3 C₁-C₄-alkyl or C₁-C₄-alkoxy groups as substituents, benzyl and in particular phenyl which are unsubstituted or substituted by from 1 to 3 C₁-C₄-alkyl, C₁-C₄-alkoxy, C₁-C₄-fluoroalkyl or C₁-C₄-fluoroalkoxy, F and Cl radicals.

The sec-phosphino group preferably corresponds to the formula -PR₂R₃, where R₂ and R₃ are each, independently of one another, a hydrocarbon radical which has from 1 to 18 carbon atoms and is unsubstituted or substituted by C₁-C₆-alkyl, trifluoromethyl, C₁-C₆-alkoxy, trifluoromethoxy, (C₁-C₄-alkyl)₂amino, (C₆H₅)₃Si, (C₁-C₁₂-alkyl)₃Si or halogen and/or contains heteroatoms O.

R₂ and R₃ are preferably radicals selected from the group consisting of linear or branched C₁-C₆-alkyl, unsubstituted cyclopentyl or cyclohexyl and cyclopentyl or cyclohexyl bearing from one to three C₁-C₄-alkyl or C₁-C₄-alkoxy groups as substituents, furyl, unsubstituted benzyl and benzyl bearing from one to three C₁-C₄-alkyl or C₁-C₄-alkoxy groups as substituents and in particular unsubstituted phenyl and phenyl bearing from one to three F, Cl, C₁-C₄-alkyl, C₁-C₄-alkoxy, C₁-C₄-fluoroalkyl or C₁-C₄-fluoroalkoxy radicals as substituents.

R₂ and R₃ are particularly preferably radicals selected from the group consisting of C₁-C₆-alkyl, cyclopentyl, cyclohexyl, furyl and unsubstituted phenyl and phenyl substituted by from one to three F, Cl, C₁-C₄-alkyl, C₁-C₄-alkoxy and/or C₁-C₄-fluoroalkyl radicals.

When R₂ and R₃ in the -PR₂R₃ group are different, the ligands are additionally P-chiral.

The secondary phosphino group can be cyclic sec-phosphino, for example a group having one of the formulae 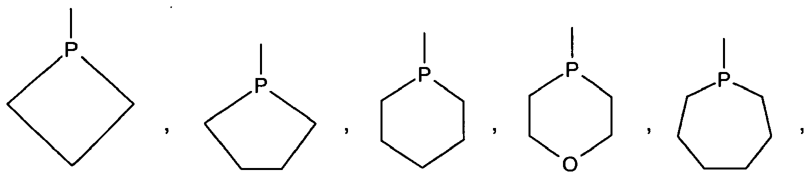 which are unsubstituted or substituted one or more times by C₁-C₈-alkyl, C₄-C₈-cycloalkyl, C₁-C₆-alkoxy, C₁-C₄-alkoxy-C₁-C₄-alkyl, phenyl, C₁-C₄-alkylphenyl or C₁-C₄-alkoxyphenyl, benzyl, C₁-C₄-alkylbenzyl or C₁-C₄-alkoxybenzyl, benzyloxy, C₁-C₄-alkylbenzyloxy or C₁-C₄-alkoxybenzyloxy or C₁-C₄-alkylidenedioxyl.

The substituents can be bound in one or both α positions relative to the P atom in order to introduce chiral carbon atoms. The substituents in one or both α positions are preferably C₁-C₄-alkyl or benzyl, for example methyl, ethyl, n- or i-propyl, benzyl or -CH₂-O-C₁-C₄-alkyl or -CH₂-O-C₆-C₁₀-aryl.

Substituents in the β,γ positions can be, for example, C₁-C₄-alkyl, C₁-C₄-alkoxy, benzyloxy or -O-CH₂-O-, -O-CH(C₁-C₄-alkyl)-O- and -O-C(C₁-C₄-alkyl)₂-O-. Some examples are methyl, ethyl, methoxy, ethoxy, -O-CH(methyl)-O- and -O-C(methyl)₂-O-. Depending on the type of substitution and number of substituents, the cyclic phosphino radicals can be C-chiral, P-chiral or C- and P-chiral.

In the radicals of the above formulae, an aliphatic 5- or 6-membered ring or benzene can be fused onto two adjacent carbon atoms.

The cyclic sec-phosphino group can, for example, correspond to the formulae (only one of the possible diastereomers is shown) 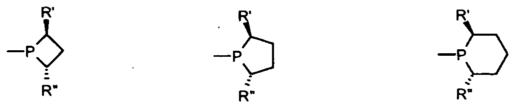 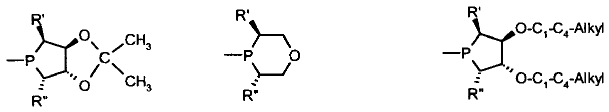 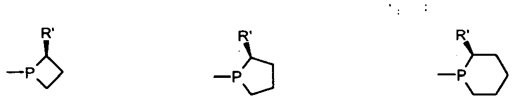 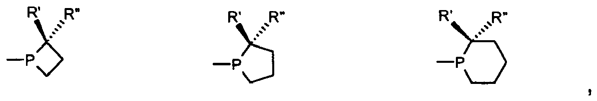 where the radicals R' and R" are each C₁-C₄-alkyl, for example methyl, ethyl, n- or i-propyl, benzyl or -CH₂-O-C₁-C₄-alkyl or -CH₂-O-C₆-C₁₀-aryl and R' and R" are identical or different.

In the compounds of the formulae I, sec-phosphino radicals X₁ and X₂ are, independently of one another, preferably acyclic sec-phosphino selected from the group consisting of -P(C₁-C₆-alkyl)₂, -P(C₅-C₈-cycloalkyl)₂, -P(C₇-C₈-bicycloalkyl)₂, -P(o-furyl)₂, -P(C₆H₅)₂, -P[2-(C₁-C₆-alkyl)C₆H₄]₂, -P[3-(C₁-C₆-alkyl)C₆H₄]₂, -P[4-(C₁-C₆-alkyl)C₆H₄]₂, -P[2-(C₁-C₆-alkoxy)C₆H₄]₂, -P[3-(C₁-C₆-alkoxy)C₆H₄]₂, -P[4-(C₁-C₆-alkoxy)C₆H₄]₂, -P[2-(trifluoromethyl)C₆H₄]₂, -P[3-(trifluoromethyl)C₆H₄]₂, -P[4-(trifluoromethyl)C₆H₄]₂, -P[3,5-bis(trifluoromethyl)C₆H₃]₂, -P[3,5-bis(C₁-C₆-alkyl)₂C₆H₃]₂, -P[3,5-bis(C₁-C₆-alkoxy)₂C₆H₃]₂ and -P[3,5-bis(C₁-C₆-alkyl)₂-4-(C₁-C₆-alkoxy)C₆H₂]₂, or a cyclic phosphino group selected from the group consisting of 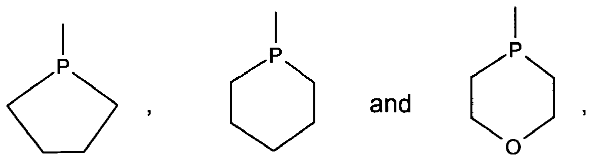 which are unsubstituted or substituted by one or more C₁-C₄-alkyl, C₁-C₄-alkoxy, C₁-C₄-alkoxy-C₁-C₂-alkyl, phenyl, benzyl, benzyloxy or C₁-C₄-alkylidenedioxyl radicals.

Some specific examples are -P(CH₃)₂, -P(i-C₃H₇)₂, -P(n-C₄H₉)₂, -P(i-C₄H₉)₂, -P(t-C₄H₉)₂, -P(C₅H₉), -P(C₆H₁₁)₂, -P(norbornyl)₂, -P(o-furyl)₂, -P(C₆H₅)₂, P[2-(methyl)C₆H₄]₂, P[3-(methyl)C₆H₄]₂, -P[4-(methyl)C₆H₄]₂, -P[2-(methoxy)C₆H₄]₂, -P[3-(methoxy)C₆H₄]₂, -P[4-(methoxy)C₆H₄]₂, -P[3-(trifluoromethyl)C₆H₄]₂, -P[4-(trifluoromethyl)C₆H₄]₂, -P[3,5-bis(trifluoromethyl)C₆H₃]₂, -P[3,5-bis(methyl)₂C₆H₃]₂, -P[3,5-bis(methoxy)₂C₆H₃]₂ and -P[3,5-bis(methyl)₂-4-(methoxy)C₆H₂]₂ and groups of the formulae 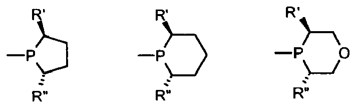 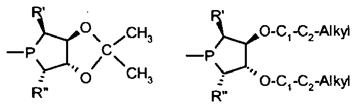 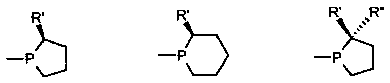 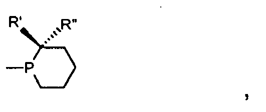 where
R' is methyl, ethyl, methoxy, ethoxy, phenoxy, benzyloxy, methoxymethyl, ethoxymethyl or benzyloxymethyl and R" independently has the same meanings as R' and is different from R'.

In the ortho-directing, chiral group Q, the chiral atom is preferably bound in the 1, 2 or 3 position relative to the cyclopentadienyl-Q bond. The group Q can be a substituted or unsubstituted open-chain radical having from 1 to 20 and preferably from 1 to 12 atoms or a cyclic radical having 4 or 8 ring atoms and a total of from 4 to 20 and preferably from 4 to 16 atoms, with the atoms being selected from the group consisting of C, O, S, N and P. The hydrogen atoms on C, O, S, N and P atoms are not counted.

The group Q can be, for example, a sulphoxyl radical of the formula -S*(=O)-R₄, where R₄ is C₁-C₈-alkyl and preferably C₂-C₆-alkyl or C₅-C₈-cycloalkyl or C₆-C₁₀-aryl. Some examples are methylsulphoxyl, ethylsulphoxyl, n- or i-propylsulphoxyl and n-, i-or t-butylsulphoxyl and phenylsulphoxyl.

The group Q can, for example, correspond to the formula -HC*R₅R₆ (the chiral atom is denoted by *) where R₅ is C₁-C₈-alkyl, C₅-C₈-cycloalkyl, phenyl or benzyl, R₆ is -OR₇ or -NR₈R₉, R₇ is C₁-C₈-alkyl, C₅-C₈-cycloalkyl, phenyl or benzyl and R₈ and R₉ are identical or different and are each C₁-C₈-alkyl, C₅-C₈-cycloalkyl, phenyl or benzyl or R₈ and R₉ together with the N atom form a five- to eight-membered ring. R₅ is preferably C₁-C₄-alkyl such as methyl, ethyl, n-propyl or phenyl. R₇ is preferably C₁-C₄-alkyl such as methyl, ethyl, n-propyl or n- or i-butyl. R₈ and R₉ are preferably identical radicals and are each preferably C₁-C₄-alkyl such as methyl, ethyl, n-propyl or n- or i-butyl or together form tetramethylene, pentamethylene or 3-oxa-1,5-pentylene. Particularly preferred groups of the formula -HCR₅R₆ are 1-methoxyeth-1-yl, 1-dimethylaminoeth-1-yl and 1-(dimethylamino)1-phenylmethyl.

When Q is an achiral, ortho-directing group -CH₂-N(C₁-C₁₂-alkyl)₂, the alkyl group is preferably linear alkyl and very particularly preferably methyl or ethyl.

When Q is an achiral, ortho-directing group -CH₂-OR, R as hydrocarbon radical is, for example, alkyl, cycloalkyl, heterocycloalkyl, cycloalkylalkyl, heterocycloalkylalkyl, aryl, aralkyl, heteroaryl, heteroaralkyl containing heteroatoms selected from the group consisting of O, S, -N= or -N(C₁-C₄-alkyl), where cyclic radicals preferably have from 5 to 7 ring members, alkyl preferably has from 1 to 6 carbon atoms and "alkyl" in cyclic radicals preferably has 1 or 2 carbon atoms. In a preferred embodiment, R as hydrocarbon radical is C₁-C₄-alkyl, C₅-C₆-cycloalkyl, C₆-C₁₀-aryl, C₇-C₁₂-aralkyl or C₇-C₁₂-alkaralkyl. Some examples of R are methyl, ethyl, n-propyl, n-butyl, cyclohexyl, cyclohexylmethyl, tetrahydrofuryl, phenyl, benzyl, furanyl and furanylmethyl.

A silyl radical R in the group -CH₂-OR can be tri(C₁-C₄-alkyl)Si or triphenylsilyl. Examples of trialkylsilyl are trimethylsilyl, triethylsilyl, tri-n-propylsilyl, tri-n-butylsilyl and dimethyl-t-butylsilyl.

When Q is an achiral, ortho-directing group -CH₂-OR, R is particularly preferably an alkyl group, preferably linear alkyl and very particularly preferably methyl or ethyl:

When Q is a radical without a chiral α carbon atom, it is bound via a carbon atom to the cyclopentadienyl ring either directly or via a bridging group. The bridging group can be, for example, methylene, ethylene or an imine group. Cyclic radicals bound to the bridging group are preferably saturated and are particularly preferably N-, O- or N,O-heterocycloalkyl substituted by C₁-C₄-alkyl, (C₁-C₄-alkyl)₂NCH₂-, (C₁-C₄-alkyl)₂NCH₂CH₂-, C₁-C₄-alkoxymethyl or C₁-C₄-alkoxyethyl and having a total of 5 or 6 ring atoms. Open-chain radicals are preferably bound via a CH₂ group to the cyclopentadienyl ring and the radicals are preferably derived from amino acids or ephedrine. Some preferred examples are: 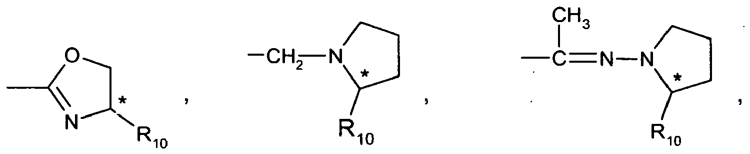 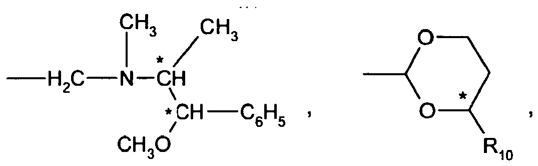 where R₁₀ is C₁-C₄-alkyl, phenyl, (C₁-C₄-alkyl)₂NCH₂-, (C₁-C₄-alkyl)₂NCH₂CH₂-, C₁-C₄-alkoxymethyl or C₁-C₄-alkoxyethyl. R₁₀ is particularly preferably methoxymethyl or dimethylaminomethyl.

The compounds of the invention can be obtained via a novel process starting out from ferrocenes which are halogenated in the α position relative to a substituent Q and can be metallated regioselectively and chemoselectively in the ortho position relative to the halogen atom by metal amides. The metal atom can then be replaced in a known manner by the group X₂. The α-bromine atom can then be metallated in order to introduce the -C^{*}H(OH)-T-X₁ group, with precisely these last stages involving formation of the asymmetric C^{*}- atom leading to astonishingly high diastereoselectivities.

The invention further provides a process for preparing compounds according to the invention of the formulae I and la, which comprises the steps:
a) reaction of a compound of the formula II, IIa or a mixture thereof, 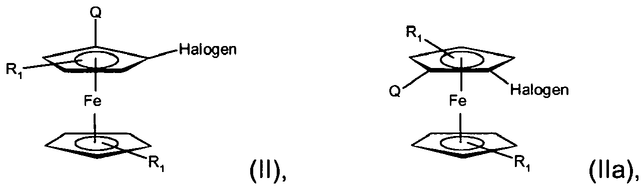 where
   Q and R₁ have the above meanings with the exception of Q = -CH₂OH and halogen is bromine or iodine, with at least equivalent amounts of an aliphatic Li sec-amide or a halogen-Mg sec-amide to form a compound of the formula III, IIIa or a mixture thereof, 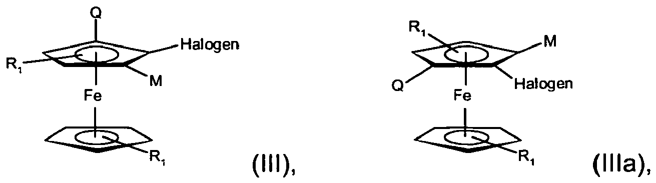 where M is Li or -MgX₃ and X₃ is Cl, Br or I,
b) reaction of a compound of the formula III or IIIa with a compound of the formula X₂-Halo, where Halo is Cl, Br or I, to introduce the group X₂ and form a compound of the formula IV or IVa, 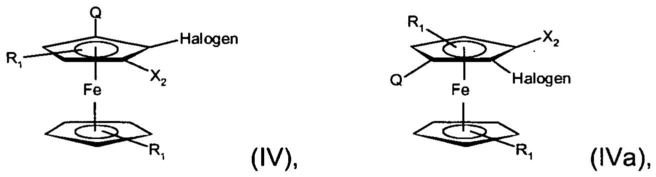
c) introduction of the group -(CH(OH)-T(R'₁)ᵥ-X₁ by reaction of a compound of the formula IV or IVa with at least equivalent amounts of alkyllithium or a magnesium Grignard compound and then with at least equivalent amounts of
   c1) an α-sec-phosphinobenzaldehyde of the formula 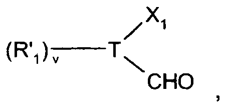 or
   c2) firstly with a dialkylformamide to form a ferrocenealdehyde of the formula V or Va 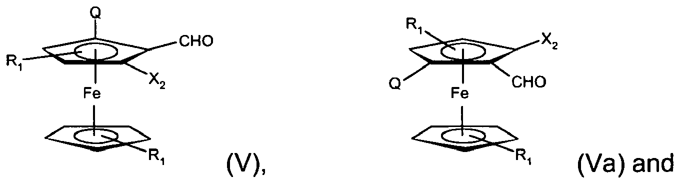 then with an organometallic compound of the formula 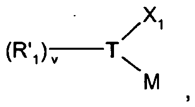 where R'₁, X₁, T, M and v have the above meanings and M is bound in the ortho position relative to X₁ to give a compound of the formula I or la; and
d) to prepare compounds in which Q is -CH₂OH, derivatization of the -CH₂OR group.

Compounds of the formulae II and IIa in which Q is methyl, for example 1-methyl-2-bromoferrocene, are described by T. Arantani et al. in Tetrahedron 26 (1970), pages 5453-5464, and by T. E. Picket et al. in J. Org. Chem. 68 (2003), pages 2592-2599.

Compounds of the formulae II and IIa in which Q is vinyl or ethyl can, for example, be prepared by elimination of amines in 1-[(dialkylamino)eth-1-yl]-2-haloferrocenes, for example 1-[(dimethylamino)eth-1-yl]-2-bromoferrocene of the formula 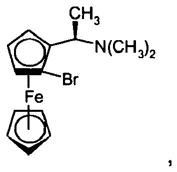 to form 1-vinyl-2-haloferrocene, preferably 1-vinyl-2-bromoferrocene, and, if desired, subsequent hydrogenation of the vinyl group formed to an ethyl group. In 1-[(dialkyl-amino)eth-1-yl]-2-haloferrocenes, the amino group can be replaced by acyloxy by means of carboxylic anhydrides and then be replaced by other secondary amino groups or by -OR radicals.

Compounds of the formulae II and IIa in which Q is a -CH₂-N(C₁-C₁₂-alkyl)₂ group can be obtained, for example, by substitution of a quaternized CH₂-bonded chiral sec-amino radical by HN(C₁-C₄-alkyl)₂. Examples of such CH₂-bonded sec-amino radicals are those of the formulae 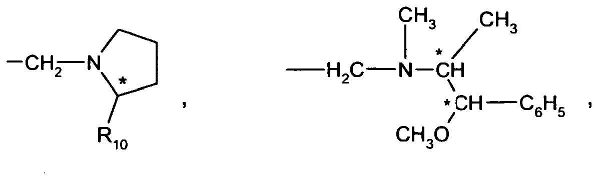 where
R₁₀ is C₁-C₄-alkyl, phenyl, (C₁-C₄-alkyl)₂NCH₂-, (C₁-C₄-alkyl)₂NCH₂CH₂-, C₁-C₄-alkoxymethyl or C₁-C₄-alkoxyethyl. R₁₀ is particularly preferably methoxymethyl or dimethylaminomethyl. Quatemization is advantageously carried out by means of alkyl halides (alkyl iodides), for example methyl iodide.

Compounds of the formulae II and IIa in which Q is -CH₂-OR can be obtained by firstly acyloxylating (for example to 1-acetyloxy-CH₂-) 1-(C₁-C₄-alkyl)₂NCH₂-2-haloferrocene by means of carboxylic anhydrides, for example acetic anhydride, to form 1-acyloxy-CH₂-2-haloferrocene and then reacting these intermediates with alcohols in the presence of bases or with alkali metal alkoxides to give 1-RO-CH₂-2-haloferrocene. Compounds of the formula II in which Q is -HCR₅-OR₇ can be obtained in an analogous way by modification of the group Q = -HCR₅-N(C₁-C₄-alkyl)₂ with alcohols HOR₇.

Surprisingly, the regioselectivity in the metallation in the ortho position relative to the bromine atom for subsequent introduction of electrophiles is essentially maintained even in the presence of the groups vinyl, methyl, ethyl, -CH₂-OR and (C₁-C₄-alkyl)₂NCH₂-.

Metallations of ferrocenes using alkyllithium or magnesium Grignard compounds are known reactions which are described, for example, by T. Hayashi et al., Bull. Chem. Soc. Jpn. 53 (1980), pages 1138 to 1151, or in Jonathan Clayden Organolithiums: Selectivity for Synthesis (Tetrahedron Organic Chemistry Series), Pergamon Press (2002). The alkyl in the alkyllithium can contain, for example, from 1 to 4 carbon atoms. Use is frequently made of methyllithium and butyllithium. Magnesium Grignard compounds are preferably compounds of the formula (C₁-C₄-alkyl)MgX₀, where X₀ is Cl, Br or I.

The reaction is advantageously carried out at low temperatures, for example from 20 to -100°C, preferably from 0 to -80°C. The reaction time is from about 1 to 20 hours. The reaction is advantageously carried out under inert protective gases, for example nitrogen or noble gases such as helium or argon.

The reaction is advantageously carried out in the presence of inert solvents. Such solvents can be used either alone or as a combination of at least two solvents. Examples of solvents are aliphatic, cycloaliphatic and aromatic hydrocarbons and also open-chain or cyclic ethers. Specific examples are petroleum ether, pentane, hexane, cyclohexane, methylcyclohexane, benzene, toluene, xylene, diethyl ether, dibutyl ether, tert-butyl methyl ether, ethylene glycol dimethyl or diethyl ether, tetrahydrofuran and dioxane.

The halogenation is generally carried out immediately after the metallation in the same reaction mixture, with similar reaction conditions as in the metallation being maintained. For the purposes of the invention, "an at least equivalent amount" means the use of preferably from 1 to 1.4 equivalents of a halogenating reagent. Halogenating reagents are, for example, halogens (Br₂, I₂), interhalogens (Cl-Br, Cl-I) and aliphatic, perhalogenated hydrocarbons [HCl₃ (iodo form), BrF₂C-CF₂Br or 1,1,2,2-tetrabromoethane] for the introduction of Br or I.

The metallation and the halogenation proceed regioselectively and the compounds of the formulae II are obtained in high yields. The reaction is also stereoselective due to the presence of the chiral group Q. Furthermore, if necessary, optical isomers can also be separated off at this stage, for example chromatographically by means of chiral columns.

In process step a), the ferrocene skeleton is once again regioselectively metallated in the same cyclopentadienyl ring in the ortho position relative to the halogen atom in formula II or IIa. Here, metal amides are sufficient to replace the acidic H atom in the ortho position relative to the halogen atom. For the purposes of the invention, "at least equivalent amounts" means the use of from 1 to 10 equivalents of an aliphatic Li sec-amide or an X₀Mg-sec-amide per CH group in the cyclopentadienyl ring of the ferrocene. X₀ is Cl, Br or iodine.

Aliphatic Li sec-amide or X₀Mg-sec-amide can be derived from secondary amines containing from 2 to 18, preferably from 2 to 12 and particularly preferably from 2 to 8 carbon atoms. The aliphatic radicals bound to the N atom can be alkyl, cycloalkyl or cycloalkylalkyl, or the radicals together with the N atom can form N-heterocyclic rings having from 4 to 12 and preferably from 5 to 7 carbon atoms. Examples of radicals bound to the N atom are methyl, ethyl, n- and i-propyl, n-butyl, pentyl, hexyl, cyclopentyl, cyclohexyl and cyclohexylmethyl. Examples of N-heterocyclic rings are pyrrolidine, piperidine, morpholine, N-methylpiperazine, 2,2,6,6-tetramethylpiperidine and azanorbornane. As an alternative, it is also possible to use Li sec-amides or X₀Mg-sec-amides to whose amide nitrogen two trialkylsilyl radicals are bound. In a preferred embodiment the amides correspond to the formula Li-N(C₃-C₄-alkyl)₂ or X₀Mg-N(C₃-C₄-alkyl)₂, where alkyl is in particular i-propyl. In another preferred embodiment, the amides are Li(2,2,6,6-tetramethylpiperidine).

The reaction of process step a) can be carried out in the above-described solvents and under the reaction conditions for the preparation of the compounds of the formulae II and IIa. The reaction temperature here should be no higher than -10°C, preferably -30°C or below. The compounds of the formulae III and IIIa are generally not isolated but instead the reaction mixture obtained is preferably used in the subsequent step b).

The reaction of process step b) is carried out using at least equivalent amounts or an excess of up to 1.5 equivalents of a compound of the formula X₂-Halo.

In process step b), radicals X₂ are introduced by reaction with compounds of the formula X₂-Halo with replacement of M. For the purposes of the invention, "at least equivalent amounts" means the use of from 1 to 1.2 equivalents of reactive compound per =CM group which reacts in the cyclopentadienyl ring. However, it is also possible to use a distinct excess of up to 5 equivalents.

The reaction is advantageously carried out at low temperatures, for example from 20 to -100°C, preferably from 0 to -80°C. The reaction is advantageously carried out under an inert protective gas, for example noble gases such as argon or else nitrogen. After addition of the reactive electrophilic compound, the mixture is advantageously allowed to warm to room temperature or is heated to elevated temperatures, for example up to 100°C and preferably up to 50°C, and stirred for some time under these conditions to complete the reaction.

The reaction is advantageously carried out in the presence of inert solvents. Such solvents can be used either alone or as a combination of at least two solvents. Examples of solvents are aliphatic, cycloaliphatic and aromatic hydrocarbons and also open-chain or cyclic ethers. Specific examples are petroleum ether, pentane, hexane, heptane, cyclohexane, methylcyclohexane, benzene, toluene, xylene, diethyl ether, dibutyl ether, tert-butyl methyl ether, ethylene glycol dimethyl or diethyl ether, tetrahydrofuran and dioxane.

The compounds of the formula IV can be isolated by known methods (extraction, distillation, crystallization, chromatographic methods) and, if desired, purified in a manner known per se.

The metallation of process step c) is carried out in a manner analogous to the above-described lithiation (using alkyllithium) and substitution reactions. It is possible to use equivalent amounts of lithiating reagent or an excess of up to 1.2 equivalents. The metallation is preferably carried out at a temperature of from -80 to about 30°C. The replacement of the metal is advantageously carried out firstly at temperatures of from +20 to -100°C and then in an after-reaction with heating to up to 80°C. The above-mentioned solvents can be used.

The reaction with α-sec-phosphinobenzaldehyde in process step c1) is advantageously carried out in a solvent and at temperatures of from -80 to 80°C and preferably from -40 to 40°C. After addition of water, the reaction mixture is extracted with an organic solvent and the compound of the invention is isolated in a known manner. Suitable solvents have been mentioned above. α-sec-Phosphinobenzaldehydes are known or can be obtained by analogous methods. The compound obtained can, for example, be purified chromatographically on silica gel columns or be used directly in the next step.

The reaction with a dialkylformamide in process step c2) is advantageously carried out at temperatures of from -30 to 50°C and preferably from -20 to 30°C and in a solvent. The reaction mixture is worked up by addition of water and extraction with an organic solvent. Suitable solvents have been mentioned above. Compounds of the formula 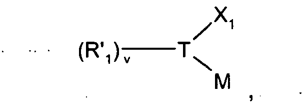 used in the next step can be obtained in a simple manner by metallation of 1-bromo-2-iodoaromatics, subsequent reaction with HaloX₁ (Halo is Cl, Br or I) to form 1-bromo-2-X₁-aromatics and subsequent metallation of these by means of alkyllithium or alkyl Mg halides. Further details may be found in the examples. The addition of compounds of the formula V or Va and the subsequent reaction are advantageously carried out in a solvent and at temperatures of from -20 to -80°C. Before the work-up, the reaction mixture can be warmed to room temperature and stirred for some time to complete the reaction. The reaction mixture is admixed with water and then extracted with organic solvents. The compounds of the invention are then isolated by removal of the solvent. The crude product can be purified chromatographically over, for example, silica gel columns. Further details are described in the examples.

The compounds of the formulae I and la are obtained in good yields and high purities by means of the processes of the invention. The high flexibility in respect of the introduction of the groups X₁ and X₂ represents a particular advantage of the process since many different groups X₁ can be attached after introduction of the groups X₂ in the same intermediate.

Compounds of the formulae I and la can be modified (introduction of acyloxy and -OR or -OR₇ or secondary amino groups) in the group Q, for example as described by T. Hayashi et al., Bull. Chem. Soc. Jpn. 53 (1980), pages 1138 to 1151. For the modification, the benzylic OH group is advantageously provided with protective groups known per se in order to avoid secondary reactions. The same modifications which have been described above for the preparation of compounds of the formulae II and IIa are possible. In compounds of the formulae I and la in which R₁ is hydrogen and Q is -CH₂-OR; -CH₂-N(C₁-C₄-alkyl)₂ or a C-bonded chiral group which directs metals of metallation reagents into the ortho position X₁, it is possible to introduce a radical R₁ which is not hydrogen. Of course, it is also possible for an OH group, for example the benzylic CHOH group or Q as CH₂OH group, to be derivatized in a manner known per se, for example conversion into an ether, ester, carbonate or urethane.

The invention also provides the intermediates of the formulae V and Va 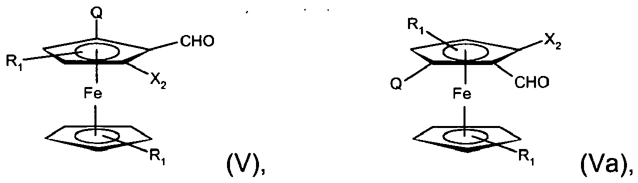 where R₁, X₂ and Q have the above meanings, with the exception of 1-[(dimethyl-amino)eth-1-yl]-2-formyl-3(diphenylphosphino)ferrocene of the formula

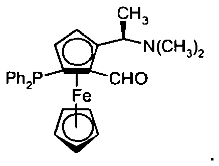

The novel compounds of the formula I and la are ligands for complexes of transition metals, preferably selected from the group of Fe, Co, Ni, Cu, Ag, Au, Ru, Rh, Pd, Os and Ir, in particular from the group consisting of Ru, Rh and Ir, which are excellent catalysts or catalyst precursors for asymmetric syntheses, for example the asymmetric hydrogenation of prochiral, unsaturated, organic compounds. If prochiral unsaturated organic compounds are used, a very high excess of optical isomers can be induced in the synthesis of organic compounds and a high chemical conversion can be achieved in short reaction times. The enantioselectivities and catalyst activities which can be achieved are excellent and in the case of an asymmetric hydrogenation are considerably higher compared to the known catalysts. Furthermore, such ligands can also be used in other asymmetric addition or cyclization reactions.

The invention further provides complexes of metals selected from the group of transition metals of the Periodic Table with one of the compounds of the formula I and/or la as ligand.

Possible metals are, for example, Cu, Ag, Au, Ni, Co, Rh, Pd, Ir, Ru and Pt. Preferred metals are rhodium and iridium and also ruthenium, platinum and palladium.

Particularly preferred metals are ruthenium, rhodium and iridium.

The metal complexes can, depending on the oxidation number and coordination number of the metal atom, contain further ligands and/or anions. They can also be cationic metal complexes. Such analogous metal complexes and their preparation have been widely described in the literature.

The metal complexes can, for example, correspond to the general formulae VI and VII, 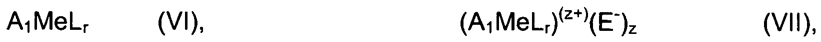 where A₁ is one of the compounds of the formula I and/or la,
the ligands L are identical or different monodentate, anionic or nonionic ligands or identical or different bidentate, anionic or nonionic ligands;
r is 2, 3 or 4 when L is a monodentate ligand or r is 1 or 2 when L is a bidentate ligand; z is 1, 2 or 3;
Me is a metal selected from the group consisting of Rh, Ir and Ru, with the metal having the oxidation state 0, 1, 2, 3 or 4;
E⁻ is the anion of an oxo acid or complex acid; and
the anionic ligands balance the charge of the oxidation state 1, 2, 3 or 4 of the metal.

The above-described preferences and embodiments apply to the compounds of the formulae I and Ia.

Monodentate nonionic ligands can, for example, be selected from the group consisting of olefins (for example ethylene, propylene), solvating solvents (nitriles, linear or cyclic ethers, unalkylated or N-alkylated amides and lactams, amines, phosphines, alcohols, carboxylic esters, sulphonic esters), nitrogen monoxide and carbon monoxide.

Suitable polydentate anionic ligands are, for example, allyls (allyl, 2-methallyl) or deprotonated 1,3-diketo compounds such as acetylacetonate.

Monodentate anionic ligands can, for example, be selected from the group consisting of halide (F, Cl, Br, I), pseudohalide (cyanide, cyanate, isocyanate) and anions of carboxylic acids, sulphonic acids and phosphonic acids (carbonate, formate, acetate, propionate, methylsulphonate, trifluoromethylsulphonate, phenylsulphonate, tosylate).

Bidentate nonionic ligands can, for example, be selected from the group consisting of linear or cyclic diolefins (for example hexadiene, cyclooctadiene, norbornadiene), dinitriles (malononitrile), unalkylated or N-alkylated diamides of carboxylic acids, diamines, diphosphines, diols, dicarboxylic diesters and disulphonic diesters.

Bidentate anionic ligands can, for example, be selected from the group consisting of the anions of dicarboxylic acids, disulphonic acids and diphosphonic acids (for example oxalic acid, malonic acid, succinic acid, maleic acid, methylenedisulphonic acid and methylenediphosphonic acid).

Preferred metal complexes also include those in which E is -Cl⁻, -Br⁻, -I⁻, ClO₄⁻, CF₃SO3⁻, CH₃SO₃⁻, HSO₄⁻, (CF₃SO₂)₂N⁻, (CF₃SO₂)₃C⁻, tetraarylborates such as B(phenyl)₄⁻, B[bis(3,5-trifluoromethyl)phenyl]₄⁻, B[bis(3,5-dimethyl)phenyl]₄⁻, B(C₆F₅)₄⁻ and B(4-methylphenyl)₄⁻, BF₄⁻, PF₆⁻, SbCl₆⁻, AsF₆⁻ or SbF₆⁻.

Very particularly preferred metal complexes which are particularly suitable for hydrogenations correspond to the formulae VIII and IX, 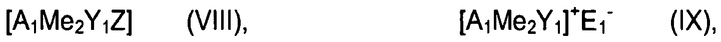 where
A₁ is one of the compounds of the formulae I and/or la;
Me₂ is rhodium or iridium;
Y₁ is two olefins or a diene;
Z is Cl, Br or I; and
E₁⁻ is the anion of an oxo acid or complex acid.

The above-described embodiments and preferences apply to the compounds of the formulae I and Ia.

An olefin Y₁ can be a C₂-C₁₂-, preferably C₂-C₆- and particularly preferably C₂-C₄-olefin. Examples are propene, but-1-ene and in particular ethylene. The diene can contain from 5 to 12 and preferably from 5 to 8 carbon atoms and be an open-chain, cyclic or polycyclic diene. The two olefin groups of the diene are preferably connected by one or two CH₂ groups. Examples are 1,4-pentadiene, cyclopentadiene, 1,5-hexadiene, 1,4-cyclohexadiene, 1,4- or 1,5-heptadiene, 1,4- or 1,5-cycloheptadiene, 1,4- or 1,5-octadiene, 1,4- or 1,5-cyclooctadiene and norbornadiene. Y is preferably two ethylene molecules or 1,5-hexadiene, 1,5-cyclooctadiene or norbornadiene.

In formula VIII, Z is preferably Cl or Br. Examples of E₁ are BF₄⁻, ClO₄⁻, CF₃SO₃⁻, CH₃SO₃⁻, HSO₄⁻, B(phenyl)₄⁻, B[bis(3,5-trifluoromethyl)phenyl]₄⁻, PF₆⁻, SbCl₆⁻, AsF₆⁻ or SbF₆⁻.

The metal complexes of the invention are prepared by methods known from the literature (see also US-A-5,371,256, US-A-5,446,844, US-A-5,583,241 and E. Jacobsen, A. Pfaltz, H. Yamamoto (Eds.), Comprehensive Asymmetric Catalysis I to III, Springer Verlag, Berlin, 1999, and references cited therein).

The metal complexes of the invention are homogeneous catalysts or catalyst precursors which can be activated under the reaction conditions and can be used for asymmetric addition reactions on prochiral, unsaturated, organic compounds.

The metal complexes can, for example, be used for asymmetric hydrogenation (addition of hydrogen) of prochiral compounds having carbon-carbon or carbon-heteroatom double bonds. Such hydrogenations using soluble homogeneous metal complexes are described, for example, in Pure and Appl. Chem., Vol. 68, No. 1, pages 131-138, (1996). Preferred unsaturated compounds for the hydrogenation contain the groups C=C, C=N and/or C=O. According to the invention, complexes of ruthenium, rhodium and iridium are preferably used for the hydrogenation.

The invention further provides for the use of the metal complexes of the invention as homogeneous catalysts for the preparation of chiral organic compounds, preferably for the asymmetric addition of hydrogen onto a carbon-carbon or carbon-heteroatom double bond in prochiral organic compounds.

A further aspect of the invention is a process for preparing chiral organic compounds by asymmetric addition of hydrogen onto a carbon-carbon or carbon-heteroatom double bond in prochiral organic compounds in the presence of a catalyst, which is characterized in that the addition reaction is carried out in the presence of catalytic amounts of at least one metal complex according to the invention.

Preferred prochiral, unsaturated compounds to be hydrogenated can contain one or more, identical or different groups C=C, C=N and/or C=O in open-chain or cyclic organic compounds, with the groups C=C, C=N and/or C=O being able to be part of a ring system or being exocyclic groups. The prochiral unsaturated compounds can be alkenes, cycloalkenes, heterocycloalkenes or open-chain or cyclic ketones, α,β-diketones, α- or β-ketocarboxylic acids or their, α,β-ketoacetals or -ketals, esters and amides, ketimines and kethydrazones.

Some examples of unsaturated organic compounds are acetophenone, 4-methoxyacetophenone, 4-trifluoromethylacetophenone, 4-nitroacetophenone, 2-chloro-acetophenone, corresponding unsubstituted or N-substituted acetophenone-benzylimines, unsubstituted or substituted benzocyclohexanone or benzo-cyclopentanone and corresponding imines, imines from the group consisting of unsubstituted or substituted tetrahydroquinoline, tetrahydropyridine and dihydro-pyrrole and unsaturated carboxylic acids, esters, amides and salts such as α- and, if appropriate, β-substituted acrylic acids or crotonic acids. Preferred carboxylic acids are those of the formula 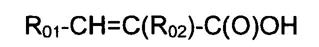 and also their salts, esters and amides, where R₀₁ is C₁-C₆-alkyl, unsubstituted C₃-C₈-cycloalkyl or C₃-C₈-cycloalkyl substituted by from 1 to 4 C₁-C₆-alkyl, C₁-C₆-alkoxy, C₁-C₆-alkoxy-C₁-C₄-alkoxy groups or unsubstituted C₆-C₁₀-aryl or C₆-C₁₀-aryl substituted by from 1 to 4 C₁-C₆-alkyl, C₁-C₆-alkoxy, C₁-C₆-alkoxy-C₁-C₄-alkoxy groups and preferably phenyl and R₀₂ is linear or branched, C₁-C₆-alkyl (for example isopropyl), unsubstituted or substituted (as defined above) cyclopentyl, cyclohexyl, phenyl or protected amino (for example acetylamino).

The process of the invention can be carried out at low or elevated temperatures for example temperatures of from -20 to 150°C, preferably from -10 to 100°C and particularly preferably from 10 to 80°C. The optical yields are generally better at relatively low temperature than at higher temperatures.

The process of the invention can be carried out at atmospheric pressure or superatmospheric pressure. The pressure can be, for example, from 10⁵ to 2 x 10⁷ Pa (pascal). Hydrogenations can be carried out at atmospheric pressure or at superatmospheric pressure.

Catalysts are preferably used in amounts of from 0.0001 to 10 mol%, particularly preferably from 0.001 to 10 mol% and very particularly preferably from 0.002 to 5 mol%, based on the compound to be hydrogenated.

The preparation of the ligands and catalysts and also the hydrogenation can be carried out without solvent or in the presence of an inert solvent, with it being possible to use one solvent or a mixture of solvents. Suitable solvents are, for example, aliphatic, cycloaliphatic and aromatic hydrocarbons (pentane, hexane, petroleum ether, cyclohexane, methylcyclohexane, benzene, toluene, xylene), aliphatic halogenated hydrocarbons (methylene chloride, chloroform, dichloroethane and tetrachloroethane), nitriles (acetonitrile, propionitrile, benzonitrile), ethers (diethyl ether, dibutyl ether, t-butyl methyl ether, ethylene glycol dimethyl ether, ethylene glycol diethyl ether, diethylene glycol dimethyl ether, tetrahydrofuran, dioxane, diethylene glycol monomethyl or monoethyl ether), ketones (acetone, methyl isobutyl ketone), carboxylic esters and lactones (ethyl or methyl acetate, valerolactone), N-substituted lactams (N-methylpyrrolidone), carboxamides (dimethylamide, dimethylformamide), acyclic ureas (dimethylimidazoline), and sulphoxides and sulphones (dimethyl sulphoxide, dimethyl sulphone, tetramethylene sulphoxide, tetramethylene sulphone) and alcohols (methanol, ethanol, propanol, butanol, ethylene glycol monomethyl ether, ethylene glycol monoethyl ether, diethylene glycol monomethyl ether) and water. The solvents can be used either alone or as mixtures of at least two solvents.

The reaction can be carried out in the presence of cocatalysts, for example quaternary ammonium halides (tetrabutylammonium iodide), and/or in the presence of protic acids, for example mineral acids, or inorganic or organic bases (see, for example, US-A-5,371,256, US-A-5,446,844 and US-A-5,583,241 and EP-A-0 691 949). The presence of fluorinated alcohols such as 1,1,1-trifluoroethanol can likewise promote the catalytic reaction.

The metal complexes used as catalysts can be added as separately prepared isolated compounds or can be formed in situ prior to the reaction and then mixed with the substrate to be hydrogenated. It can be advantageous to add additional ligand in the reaction when using isolated metal complexes or to use an excess of ligands in the case of the in situ preparation. The excess can be, for example, from 1 to 6 and preferably from 1 to 2 mol, based on the metal compound used for the preparation.

The process of the invention is generally carried out by placing the catalyst in a reaction vessel and then adding the substrate, if appropriate reaction auxiliaries and the compound to be added on and subsequently starting the reaction. Gaseous compounds to be added on, for example hydrogen or ammonia, are preferably introduced under pressure. The process can be carried out continuously or batchwise in various types of reactor.

The chiral, organic compounds prepared according to the invention are active substances or intermediates for the preparation of such substances, in particular in the field of preparation of favours and fragrances, pharmaceuticals and agrochemicals.

The following examples illustrate the invention.

### Starting materials and abbreviations

1-[(Dimethylamino)eth-1-yl]ferrocene is commercially available. 1-[(Dimethylamino)eth-1-yl]-2-bromoferrocene of the formula 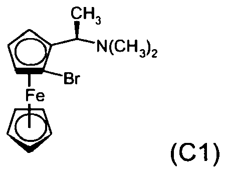 is prepared as described in the literature: J. W Han et al. Helv. Chim. Acta, 85 (2002), 3848 - 3854. The compound will hereinafter be referred to as C1.

1-Ethyl-2-bromo-3-diphenylphosphinoferrocene of the formula 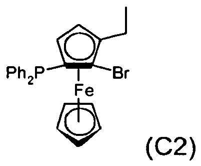 is prepared as described in the Patent WO2006114438. The compound will hereinafter be referred to as C2.

The reactions are carried out under inert gas (argon).

The reactions and yields are not optimized.

Abbreviations: TMP = 2,2,6,6-tetramethylpiperidine; TBME= tert-butyl methyl ether; DMF: N,N-dimethylformamide, THF = tetrahydrofuran, MeOH = methanol, EA = ethyl acetate, Me = methyl, Et = ethyl, i-Pr = i-propyl, nbd = norbomadiene,

Cy = cyclohexyl, n-BuLi = n-butyllithium, eq. = equivalent(s).

sec-Phosphino-o-bromobenzenes are prepared as follows:

### a) 2-Diphenylphosphino-1-bromobenzene

17.5 ml (35 mmol) of i-propylmagnesium chloride (2.0 M in THF) are added dropwise to a solution of 5 ml (35 mmol) of 2-bromoiodobenzene in 25 ml of THF while stirring at from -30°C to -35°C. The temperature is maintained and the reaction mixture is stirred for a further 1 hour. 9.3 g (42 mmol) of diphenylphosphine chloride are then added slowly, the mixture is stirred for a further 30 minutes and the cooling is then removed. After stirring at room temperature for 1 hour, 20 ml of water are added, the mixture is extracted with ethyl acetate, the organic phase is washed with saturated aqueous NaHCO₃ and NaCl solution and dried over sodium sulphate. Distilling off the solvent gives a colourless oil which becomes solid on addition of 100 ml of ethanol. Filtration and washing with a little ethanol gives the desired product as a white powder in a yield of 90%. ¹H-NMR (C₆D₆, 300 MHz), characteristic signals: 7.38-7.30 (m, 5H), 7.06-7.02 (m, 6H), 6.91-6.86 (m, 1 H), 6.79-6.73 (m, 1 H), 6.71-6.65 (m, 1H). ³¹P-NMR (C₆D₆, 121 MHz): -3.79 (s).

### b) 2-Di(para-trifluoromethylphenyl)phosphino-1-bromobenzene

The compound is prepared by a method analogous to method a). bis(p-Trifluoromethylphenyl)phosphine chloride is used in the place of diphenylphosphine chloride. The title compound is obtained as a white powder in a yield of 90%. ¹H-NMR (C₆D₆, 300 MHz), characteristic signals: 7.23-7.18 (m, 1H), 7.10-7.01 (m, 4H), 6.93-6.84 (m, 4H), 6.67-6.54 (m, 2H), 6.48-6.43 (m, 1H). ³¹P-NMR (C₆D₆, 121 MHz): -4.83 (s).

### c) 2-Diethylphosphino-1-bromobenzene

The compound is prepared by a method analogous to method a). Diethylphosphine chloride is used in place of diphenylphosphine chloride. The title compound is obtained as a colourless oil in a yield of 63%. ¹H-NMR (C₆D₆, 300 MHz), characteristic signals: 7.43-7.38 (m, 1H), 7.06-7.01 (m, 1H), 6.96-6.90 (m, 1H), 6.75-6.68 (m, 1H), 1.62-1.38 (m, 4H), 0.99-0.86 (m, 6H). ³¹P-NMR (C₆D₆, 121 MHz): -14.5 (s).

### A) Preparation of 2-halo-3-sec-phosphinoferrocenes

### Example A1: 1-[(Dimethylamino)eth-1-yl]-2-bromo-3(dicyclohexylphosphino)-ferrocene (A1) of the formula

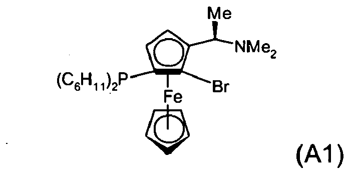

11.2 ml (66.9 mmol, 3.0 eq.) of 2,2-6,6-tetramethylpiperidine (TMP, 98%) are dissolved in 100 ml of absolute THF and cooled to 0°C. 40.0 ml (64.7 mmol, 2.9 eq.) of n-butyllithium solution (1.6 M in hexane) are added dropwise. The mixture is subsequently stirred at 0°C for one hour (solution A). 7.46 g (22.3 mmol, 1.0 eq.) of compound C1 are dissolved in 60 ml of absolute THF and cooled to -60°C (solution B). Solution A is then added dropwise to solution B over a period of 30 minutes and the mixture is then stirred for 1.5 hours, with the temperature being allowed to rise to -40°C. The reaction mixture is cooled to -78°C and 6.00 ml (26.9 mmol, 1.2 equivalents) of dicyclohexylphosphine chloride are added. After stirring at -78°C for a further 2.5 hours, 150 ml of water are added and the organic phase is then isolated. The aqueous phase is acidified with saturated, aqueous ammonium chloride solution and extracted with 100 ml of TBME. The combined organic phases are dried over sodium sulphate and freed of the solvent. The brown oil obtained is purified by chromatography [silica gel, eluent = acetone:heptane (1:2)]. This gives 9.75 g (82%) of the title compound as a brown oil. ¹H-NMR (C₆D₆, 300 MHz), characteristic signals: 4.05 (s, 5H, cp), 2.16 (s, 6H, N(CH₃)₂), 1.35 (d, 3H, C(NMe₂)CH₃). ³¹P-NMR (C₆D₆, 121 MHz): -9.3 (s).

### Example A2: 1-[(Dimethylamino)eth-1-yl]-2-bromo-3(diphenylphosphino)ferrocene (A2) of the formula

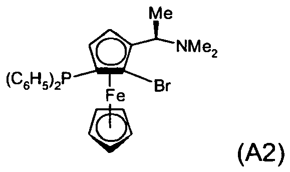

Compound A2 is prepared by a method analogous to Example A1. Diphenylphosphine chloride is used in place of dicyclohexylphosphine chloride. The crude product is purified by chromatography (silica gel 60; eluent = EA containing 2% of triethylamine). The title compound is obtained as an orange solid in a yield of 73%. ¹H-NMR (C₆D₆, 300 MHz), characteristic signals: 7.62 (m, 2H), 7.65 (m, 2H), 7.11-6.99 (m, 6H), 4.03 (s, 5H), 3.96 (m, 1H), 3.90 (q, 1H), 3.65 (m, 1H), 2.19 (s, 6H), 1.31 (d, 3H). ³¹P-NMR (C₆D₆, 121 MHz): -18.4 (s).

### Example A3: 1-[(Dimethylamino)eth-1-yl]-2-bromo-3-(di-ortho-anisylphosphino)-ferrocene (A3) of the formula

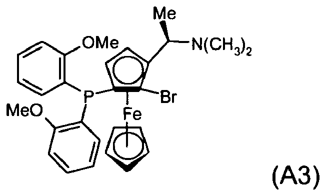

Compound A3 is prepared by a method analogous to Example A1. Di-ortho-anisylphosphine chloride is used in place of dicyclohexylphosphine chloride. The crude product is purified firstly by chromatography (silica gel 60; eluent = toluene containing 1% of triethylamine) and subsequently by recrystallization from MeOH. The title compound is obtained as a yellow solid in a yield of 64%. ¹H-NMR (C₆D₆, 300 MHz), characteristic signals: 7.36-6.36 (various m, 8 aromatic H), 4.17 (s, 5H, cp), 4.02 (m, 1H), 3.95 (m, 1H), 3.47 (s, 3H), 3.11 (s, 3H), 2.24 (s, 6H, N(CH₃)₂), 1.37 (d, 3H). ³¹P-NMR (C₆D₆, 121 MHz): -44.2 (s).

### Example A4: 1-[(Dimethylamino)eth-1-yl]-2-bromo-3-(di(3,5-dimethyl-4-methoxyphenyl)phosphino)ferrocene (A4) of the formula

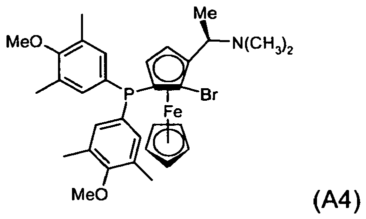

Compound A4 is prepared by a method analogous to Example A1. Di(3,5-dimethyl-4-methoxyphenyl)phosphine chloride is used in place of dicyclohexylphosphine chloride. The crude product is purified by chromatography (silica gel 60; eluent = acetone). The title compound is obtained as a yellow-orange solid in a yield of 87%. ¹H-NMR (C₆D₆, 300 MHz), characteristic signals: 7.54 (s, 1H), 7.52 (s, 1H), 7.20 (s, 1H), 7.17 (s, 1H), 4.11 (s, 5H), 4.05 (m, 1H), 3.95 (q, 1H), 3.86 (m, 1H), 3.31 (s, 3H), 3.27 (s, 3H), 2.25 (s, 6H), 2.13 (s, 6H), 2.12 (s, 6H), 1.38 (d, 3H). ³¹P-NMR (C₆D₆, 121 MHz): -20.6 (s).

### B) Preparation of 2-formyl-3-sec-phosphinoferrocene

### Example B1: 1-[(Dimethylamino)eth-1-yl]-2-formyl-3-(diphenylphosphino)ferrocene (B1) of the formula

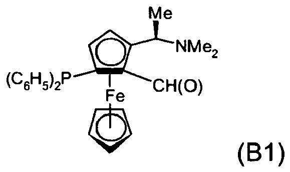

2.8 ml (4.6 mmol) of n-BuLi (1.6 M solution in hexane) are added dropwise to a solution of 2.0 g (3.84 mmol) of compound A2 in 30 ml of TBME at 0°C while stirring and the reaction mixture is stirred at this temperature for another one hour. 0.63 ml (7.6 mmol) of DMF is then slowly added dropwise over a period of 30 minutes. The mixture is stirred at 0°C for another 30 minutes and the cooling bath is then removed and the temperature is allowed to rise to room temperature. The reaction mixture is admixed with 20 ml of water and extracted with ethyl acetate. The organic phases are combined, washed with saturated aqueous NaCl, dried over sodium sulphate and evaporated to dryness on a rotary evaporator. Purification by chromatography (silica gel 60; eluent = EA/heptane 1:1 containing 1% of triethylamine) gives the title compound B1 as a red-orange foam in a yield of > 95%. ¹H-NMR (C₆D₆, 300 MHz), characteristic signals: 10.47 (d, 1H), 7.60-6.98 (various m, 10 aromatic H), 4.24 (q, 1H), 4.15 (m, 1H), 3.94 (s, 5H), 3.82 (m, 1H), 2.09 (s, 6H), 1.18 (d, 3H). ³¹P-NMR (C₆D₆, 121 MHz): -19.1 (s).

### Example B2: 1-[(Dimethylamino)eth-1-yl]-2-formyl-3-(di-ortho-anisylphosphino)-ferrocene (B2) of the formula

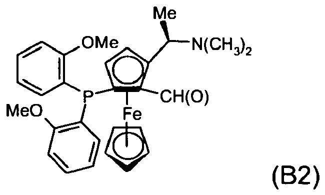

Compound B2 is prepared by a method analogous to Example B1 starting out from compound A3. Purification by chromatography (silica gel 60; eluent = EA containing 1% of triethylamine) gives the title compound as a red-orange foam in a yield of > 95%. ¹H-NMR (C₆D₆, 300 MHz), characteristic signals: 10.58 (d, 1H), 7.32-6.36 (various m, 8 aromatic H), 4.44 (q, 1H), 4.25 (m, 1H), 4.09 (s, 5H, cp), 3.95 (m, 1H), 3.43 (s, 3H), 3.12 (s, 3H), 2.18 (s, 6H, N(CH₃)₂), 1.28 (d, 3H) ³¹P-NMR (C₆D₆, 121 MHz): -45.2 (s).

### Example B3: 1-[(Dimethylamino)eth-1-yl]-2-formyl-3-(dicyclohexylphosphino)-ferrocene (B3) of the formula

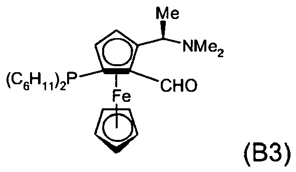

Compound B3 is prepared by a method analogous to Example B1 starting out from compound A1. Purification by chromatography (silica gel 60; eluent = EA/heptane 1:1 containing 1% of triethylamine) gives the title compound as a red-orange foam in a yield of 56%. ¹H-NMR (C₆D₆, 300 MHz), characteristic signals: 10.21 (d, 1H), 4.65 (m, 1H), 4.41 (m, 1H), 4.39 (q, 1H), 4.13 (s, 5H, cp), 2.04 (s, 6H, N(CH₃)₂), 1.45 (d, 3H). ³¹P-NMR (C₆D₆, 121 MHz): -16.1 (s).

### Example B4: 1-[(Dimethylamino)eth-1-yl]-2-formyl-3-(bis(3,5-dimethyl-4-methoxyphenyl) phosphino)ferrocene (B4) of the formula

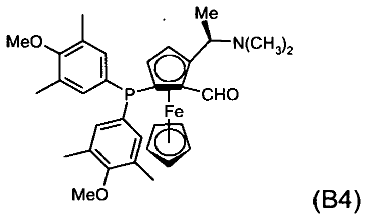

Compound B4 is prepared by a method analogous to Example B1 starting out from compound A4. 3 equivalents of DMF are added per lithiated equivalent of the compound A4. The title compound is obtained in virtually quantitative yield as a red-orange solid foam which is still contaminated with a little debrominated material. The product is used further without purification. ¹H-NMR (C₆D₆, 300 MHz), characteristic signals: 10.55 (d, 1H), 7.48 (s, 1H), 7.45 (s, 1H), 7.18 (s, 1H), 7.16 (s, 1H), 4.36 (q, 1H), 4.26 (m, 1H), 4.04 (m, 1H), 4.03 (s, 5H), 3.31 (s, 3H), 3.25 (s, 3H), 2.18-2.07 (m, 18 H), 1.26 (d, 3H). ³¹P-NMR (C₆D₆, 121 MHz): -21.6 (s).

### Example B5: 1-Ethyl-2-formyl-3(diphenylphosphino)ferrocene (B5) of the formula

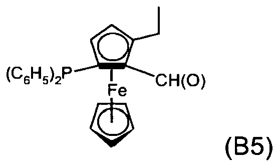

Compound B5 is prepared by a method analogous to Example B4 starting out from compound C2. 3 equivalents of DMF are added per lithiated equivalent of the compound C2. The title compound is obtained in virtually quantitative yield as a red solid foam. The product is used further without purification. ¹H-NMR (C₆D₆, 300 MHz), characteristic signals: 10.66 (d, 1H), 7.59-6.95 (various m, 10 H), 4.19 (m, 1H), 3.89 (s, 5H), 3.80 (m, 1H), 2.85 (m, 1H), 2.54 (m, 1H), 1.14 (t, 3H). ³¹P-NMR (C₆D₆, 121 MHz): -21.4 (s).

### C) Preparation of ferrocenediphosphines

### Example C1: Preparation of

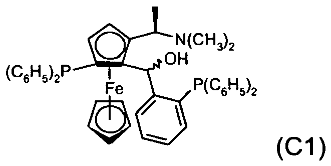

1 ml (1.6 mmol) of n-BuLi (1.6 molar in hexane) is added dropwise to a solution of 0.532 g (1.6 mmol) of the compound 2-diphenylphosphino-1-bromobenzene in a mixture of 5 ml of THF and 5 ml of TBME at a temperature of -70°C while stirring. The red reaction solution is stirred at a temperature of from -70°C to -40°C for 1 hour. This solution is then slowly added to a solution of 0.54 g (1.2 mmol) of the compound B1 in 5 ml of TBME and the mixture stirred further at -70°C. After 15 minutes, the cooling is removed and the mixture is stirred at room temperature for another 1.5 hours. The reaction mixture is admixed with 20 ml of water, the organic phase is washed with saturated, aqueous NaCl, dried over sodium sulphate and the solvent is distilled off on a rotary evaporator. An NMR spectrum of the crude product shows that virtually only one of two possible diastereomers has been formed. Purification by chromatography (silica gel; eluent = EA/heptane 1:2 containing 1 % of triethylamine) gives the title compound in the form of a pure diastereomer as an orange foam in a yield of 80%. ¹H-NMR (C₆D₆, 300 MHz), characteristic signals: 7.81-6.58 (various m, 24 aromatic H), 4.46 (q, 1H), 4.22 (m, 1H), 4.09 (m, 1H), 4.04 (s, 5H), 1.85 (s, 6H), 0.96 (d, 3H). ³¹P-NMR (C₆D₆, 121 MHz): -15.9 (d), -24.6 (d).

### Example C1.1: Preparation of the other epimer of C1 (other configuration on the alcohol carbon)

2.8 ml (4.6 mmol) of n-BuLi (1.6 M solution in hexane) are added dropwise to a solution of 0.96 g (1.84 mmol) of compound A2 in 30 ml of TBME at 0°C while stirring and the reaction mixture is stirred at this temperature for another one hour. A solution of 1 equivalent of 2-(diphenylphosphino)benzaldehyde (commercially available) in 5 ml of THF is then added dropwise. The mixture is stirred at 0°C for another 30 minutes, the cooling bath is then removed and the temperature is allowed to rise to room temperature. The reaction mixture is admixed with 20 ml of water and extracted with ethyl acetate. The organic phases are combined, dried over sodium sulphate and evaporated to dryness on a rotary evaporator. An NMR spectrum of the crude product shows that predominantly the other epimer has been formed (ratio of C1 to C1.1 is about 1:4). Column chromatography (silica gel 60; eluent = EA/heptane 1:1 containing 1% of triethylamine) gives small amounts of the compound C1 in the first fraction and the title compound C1.1 as an orange-yellow foam in the 2nd fraction (yield: 68%). ¹H-NMR (C₆D₆, 300 MHz), characteristic signals: 7.65-6.76 (various m, 24 aromatic H), 4.21 (q, 1H), 4.21 (m, 1H), 4.10 (m, 1H), 3.88 (s, 5H), 1.90 (s, 6H), 1.03 (d, 3H). ³¹P-NMR (C₆D₆, 121 MHz): -12.7 (d), -22.4 (d).

### Example C1.2: Preparation of

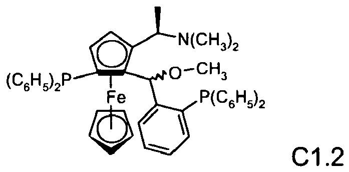

A solution of 175 mg (0.24 mmol) of the compound C1 in 3 ml of THF is added dropwise to a suspension of 42 mg (0.36 mmol) of potassium hydride in 1 ml of THF at 0-5°C. The temperature is subsequently increased to 50°C and the mixture is stirred for 30 minutes. After cooling to 0-5°C, 18 microlitres (0.29 mmol) of methyl iodide are added. The cooling is removed and the mixture is stirred at room temperature for another 30 minutes. The yellow suspension is admixed with water. After extraction with TBME, the organic phase is dried over sodium sulphate and freed of the solvent. Purification by chromatography (silica gel; eluent = ethyl acetate containing 1% of NEt₃) gives the title compound as a solid yellow foam in a yield of 92%. ¹H-NMR (C₆D₆, 300 MHz), characteristic signals: 9.30 (m. 1H), 7.75-6.84 (various m, 24H), 4.76 (m, 1H), 4.20 (m, 1H), 3.94 (m, 1H), 3.88 (s, 5H), 3.01 (s, 3H), 2.32 (s, 6H), 1.21 (d, 3H). ³¹P-NMR (C₆D₆, 121 MHz): -17.3 (d), -18.7 (d).

### Example C2: Preparation of

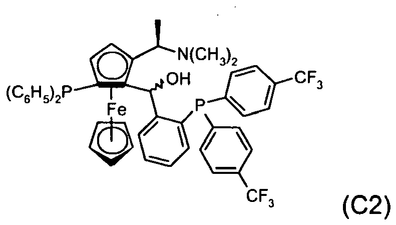

Compound C2 is prepared by a method analogous to Example C1 starting out from compound B1 and 2-di(para-trifluoromethylphenyl)phosphino-1-bromobenzene. According to NMR of the crude product, only one of the two possible diastereomers is formed. Purification by chromatography (silica gel; eluent = EA/heptane 1:1.5) gives the title compound in the form of a pure diastereomer as a yellow solid foam in a yield of 89%. ¹H-NMR (C₆D₆, 300 MHz), characteristic signals: 7.69-6.58 (various m, 22H), 4.39 (q, 1H), 4.22(m, 1H), 4.11 (m, 1H) 4.02 (s, 5H), 1.81 (s, 6H), 0.92 (d, 3H). ³¹P-NMR (C₆D₆, 121 MHz): -15.2 (d), -24.5 (d).

### Example C3: Preparation of

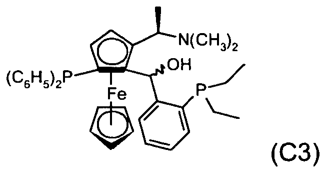

Compound C3 is prepared by a method analogous to Example C1 starting out from compound B1 and 2-diethylphosphino-1-bromobenzene. According to NMR of the crude product, only one of the two possible diastereomers is formed (> 95%). Purification by chromatography (silica gel; eluent = EA/heptane 1:1 containing 1% of NEt₃) gives the title compound in the form of a pure diastereomer as a yellow solid foam in a yield of 81%. ¹H-NMR (C₆D₆, 300 MHz), characteristic signals: 7.77-6.62 (various m, 14H), 4.57 (q, 1H), 4.21 (m, 1H), 4.08 (s, 5H), 4.04 (m, 1H), 1.93 (s, 6H), 1.92-1.76 (m, 4H), 1.40-1.09 (m, 6H), 0.99 (d, 3H). ³¹P-NMR (C₆D₆, 121 MHz): -24.2 (d), -31.5 (d).

### Example C4: Preparation of

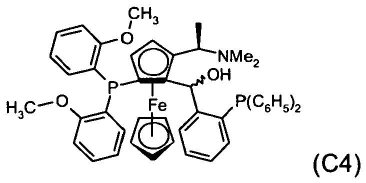

Compound C4 is prepared by a method analogous to Example C1 starting out from compound B2 and 2-diphenylphosphino-1-bromobenzene. Purification by chromatography (silica gel; eluent = EA/heptane 1:2 to 1:1 containing 1% of triethylamine) gives the title compound in the form of a pure diastereomer as an orange foam in a yield of 56%. ¹H-NMR (C₆D₆, 300 MHz), characteristic signals: 7.92-6.17 (various m, 22 aromatic H), 4.52 (q, 1H), 4.28 (m, 1H), 4.25 (m, 1H), 4.17 (s, 5H), 3.52 (s, 3H), 2.97 (s, 3H), 1.90 (s, 6H), 1.00 (d, 3H). ³¹P-NMR (C₆D₆, 121 MHz): -15.9 (d), -52.2 (d).

### Example C5: Preparation of

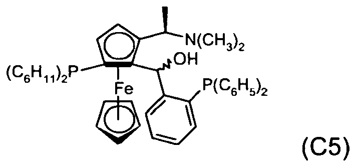

0.9 ml (1.4 mmol) of n-BuLi (1.6 molar in hexane) is added dropwise to a solution of 1.7 g (5 mmol) of 2-diphenylphosphino-1-bromobenzene in a mixture of 20 ml of THF and 30 ml of TBME at a temperature of -70°C while stirring. The red reaction solution is stirred at a temperature of from -70°C to -40°C for 1 hour. This solution is then slowly added to a solution of 2 g (4.2 mmol) of the compound B3 in 30 ml of TBME and the mixture is stirred at -70°C. After 1 hour, the temperature is allowed to rise to -50°C. The reaction mixture is admixed with 20 ml of water, the organic phase is washed with saturated aqueous NaCl, dried over sodium sulphate and the solvent is distilled off on a rotary evaporator. An NMR spectrum of the crude product shows that virtually only one of two possible diastereomers has been formed. Purification by chromatography (silica gel; eluent = acetone/toluene 1:10) gives the title compound in the form of a pure diastereomer as an orange foam in a yield of 55%. ¹H-NMR (C₆D₆, 300 MHz), characteristic signals: 7.86-7.04 (diverse m, 14 aromatic H), 5.67 (broad s, 1H), 4.58 (q, 1H), 4.33 (m, 1H), 4.31 (s, 5H), 4.24 (m, 1H), 1.96 (s, 6H), 1.11 (d, 3H). ³¹P-NMR (C₆D₆, 121 MHz): -11.0 (d), -16.5 (d).

### Example C6: Preparation of

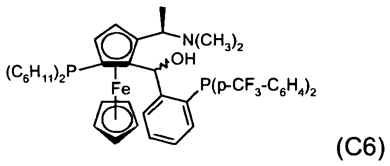

Compound C6 is prepared by a method analogous to Example C5 starting out from the compounds B3 and 2-di(para-trifluoromethylphenyl)phosphino-1-bromobenzene. Purification by chromatography (silica gel; eluent = EA/heptane 1:20 containing 1% of triethylamine) gives the title compound as pure diastereomer as an orange foam in a yield of 75%. ¹H-NMR (C₆D₆, 300 MHz), characteristic signals: 7.65-7.05 (various m, 12 aromatic H), 6.22 (broad s, 1H), 4.51 (q, 1H), 4.32 (m, 1H), 4.31 (s, 5H), 4.22 (m, 1H), 1.91 (s, 6H), 1.06 (d, 3H). ³¹P-NMR (C₆D₆, 121 MHz): -11.3 (d), -15.6 (d).

### Example C7: Preparation of the compound

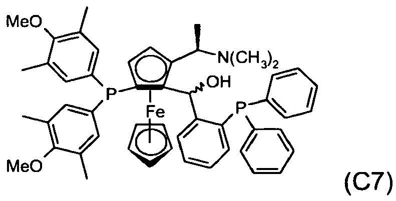

Compound C7 is prepared by a method analogous to Example C1 starting out from compound B4 and 2-diphenylphosphino-1-bromobenzene. According to NMR of the crude product, only one of the two possible diastereomers is formed (> 95%). Purification by chromatography (silica gel; eluent = EA/heptane 1:5 containing 0.5% of triethylamine) gives the title compound in the form of a pure diastereomer as a yellow solid foam in a yield of 51%. ¹H-NMR (C₆D₆, 300 MHz), characteristic signals: 7.90-6.57 (various m, 18H), 4.52 (m, 1H), 4.27 (s, 2H), 4.14 (s, 5H), 3.31 (s, 3H), 3.29 (s, 3H), 2.18 (s, 6H), 2.12 (s, 6H), 1.90 (s, 6H), 0.97 (d, 3H). ³¹P-NMR (C₆D₆, 121 MHz): -16.6 (d), -26.2 (d).

### Example C8: Preparation of the compound

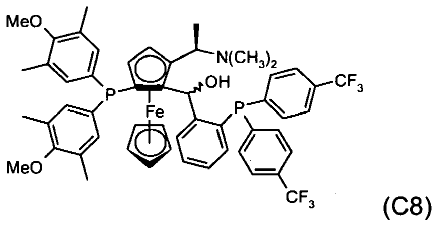

Compound C8 is prepared by a method analogous to Example C1 starting out from compound B4 and 2-di(para-trifluoromethylphenyl)phosphino-1-bromobenzene. According to NMR of the crude product, only one of the two possible diastereomers is formed (> 95%). Purification by chromatography (silica gel; eluent = EA/heptane 1:5 containing 0.5% of triethylamine) gives the title compound in the form of a pure diastereomer as a yellow solid foam in a yield of 50%. ¹H-NMR (C₆D₆, 300 MHz), characteristic signals: 7.79-6.56 (various m, 17 H), 4.45 (q, 1H), 4.31-4.27 (m, 2H), 4.13 (s, 5H), 3.291 (s, 3H), 3.288 (s, 3H), 2.14 (s, 6H), 2.02 (s, 6H), 1.87 (s, 6H), 0.95 (d, 3H). ³¹P-NMR (C₆D₆, 121 MHz): -16.0 (d), -26.1 (d).

### Example C9: Preparation of the compounds

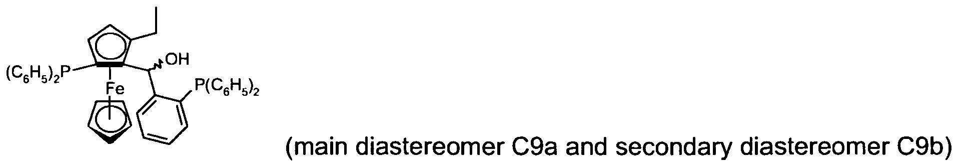

Compound C9 is prepared by a method analogous to Example C1 starting out from compound B5. According to NMR of the crude product, a mixture of the two possible diastereomers in a ratio of about 2:8 is formed. The two diastereomers can be separated by means of column chromatography (silica gel; eluent = EA/heptane1:25).

The first fraction gives the diastereomer C9b which is formed in only small amounts. It is isolated as an orange solid in a yield of 15%. ¹H-NMR (C₆D₆, 300 MHz), characteristic signals: 7.63-6.70 (various m, 24 aromatic H), 4.23 (m, 1H), 4.04 (s, 5H), 3.88 (m, 1H), 2.96-2.68 (m, 2H), 1.10 (t, 3H). ³¹P-NMR (C₆D₆, 121 MHz): -16.0 (d), -22.4 (d).

The second fraction gives the main diastereomer C9a as an orange solid in a yield of 75%. ¹H-NMR (C₆D₆, 300 MHz), characteristic signals: 7.60-6.60 (various m, 24 aromatic H), 4.46 (m, 1H), 4.16 (m, 1H), 4.03 (m, 1H), 3.96 (s, 5H), 2.26 (q, 2H), 0.85 (t, 3H). ³¹P-NMR (C₆D₆, 121 MHz): -14.0 (d), -21.6 (d).

### D) Preparation of metal complexes

Procedure: about 10 mg of ligand together with 0.95 molar equivalent of [Rh(norbomadiene)₂]BF₄ are dissolved in 0.7 ml of CD₃OD under an argon atmosphere. The red solution is transferred under argon to an NMR tube and examined by means of ³¹P-NMR.

### Example D1: Rhodium complex with the ligand C1

³¹P-NMR (CD₃OD 121 MHz): 24.4 (d of d, J_{Rh-P} = 156 Hz), 16.7 (d of d, J_{RH-P} = 158 Hz).

### Example D2: Rhodium complex with the ligand C1.1

³¹P-NMR (CD₃OD 121 MHz): 20.4 (d of d, J_{Rh-P} = 152 Hz), 16.9 (d of d, J_{Rh-P} = 152 Hz).

### E) Use examples

All work was carried out under argon using degassed solvents.

### Examples E1-E23: Hydrogenations

4.73 mg (0.0127 mmol) of [Rh(norbomadiene)₂]BF₄ and (0.0133 mmol) of ligand C1 (ratio of ligand to metal = 1.05) are stirred in 2 ml of methanol for 10 minutes. A solution of 550 mg (2.5 mmol) of methyl acetamidocinnamate (MAC) in 4 ml of methanol is added to this solution, followed by the amount of methanol (4 ml) required for the substance concentration to be 0.25 M. The argon is taken off by means of vacuum and the vessel is connected to a hydrogen supply (1 bar). The hydrogenation is started by switching on the stirrer. After 1 hour, the stirrer is switched off and the solution is blanketed with argon again. Conversion and enantiomeric excess (ee) are determined by gas chromatography using a chiral column (Lipodex E): the conversion is quantitative and the optical yield ee (entantiomeric excess) is 98%.

The hydrogenations of further substrates shown in Table 1 below are carried out in an analogous way. The hydrogenations using a relatively high hydrogen pressure are carried out in a steel autoclave. The reaction solutions are injected into the argon-flushed autoclave by means of a hollow needle under a countercurrent of argon. The results are reported in Table 2.

| sable 1: Substrates | | |
|---|---|---|
| Substrate | Structures and reaction | Determination of conversion and ee: |
| DMI | 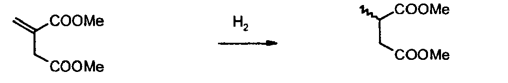 | GC using a chiral column: Lipodex-E |
| MAC | 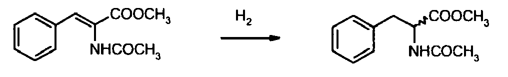 | GC using a chiral column: Chirasil-L-val |
| MAA | 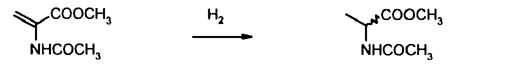 | GC using a chiral column: Chirasil-L-val |
| EOP | 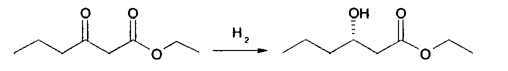 | GC using a chiral column: Lipodex-E |
| MEA | 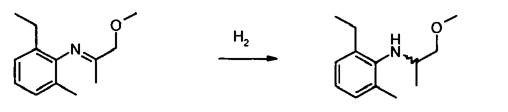 | HPLC using a chiral column: Chiracel-OD-H |
| Z-EAAC | 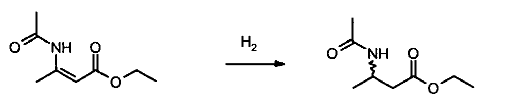 | GC using a chiral column: Betadex-110 |
| KEPL | 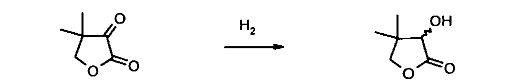 | GC using a chiral column: Lipodex-E |

Abbreviations: ee = enantiomeric excess, GC = gas chromatography, HPLC = highpressure liquid chromatography

| Table 2: Hydrogenation results | | | | | | | | | | | |
|---|---|---|---|---|---|---|---|---|---|---|---|
| | Ligand | Metal | Substrate | [S] | S/C | Solv. | P | t [h] | C (%) | ee (%) | Conf. |
| E1 | C1 | Rh^{a)} | MAC | 0.25 | 200 | MeOH | 1 | 1 | 100 | 98 | S |
| E2 | C1 | Rh^{a)} | DMI | 0.25 | 200 | MeOH | 1 | 0.3 | 100 | 98.5 | R |
| E3 | C1 | Rh^{a)} | MAA | 0.25 | 200 | MeOH | 1 | 0.2 | 100 | 99.2 | S |
| E4 | C1.2 | Rh^{a)} | DMI | 0.25 | 200 | MeOH | 1 | 0.1 | 100 | 99.4 | R |
| E5 | C1.2 | Rh^{a)} | MAA | 0.25 | 200 | MeOH | 1 | 0.2 | 100 | 99.7 | S |
| E6 | C2 | Rh^{a)} | MAC | 0.1 | 25 | EtOH | 1 | 2 | 100 | 95.7 | S |
| E7 | C2 | Rh^{a)} | MAA | 0.1 | 25 | EtOH | 1 | 2 | 100 | 96.3 | S |
| E8 | C2 | Rh^{a)} | DMI | 0.36 | 100 | EtOH | 1 | 2 | 100 | 97.0 | R |
| E9 | C3 | Rh^{a)} | Z-EAAC | 0.36 | 100 | THF³⁾ | 1 | 2 | 100 | 92 | S |
| E10²⁾ | C4 | Ir^{c)} | MEA* | 0.25 | 200 | Toluene | 80 | 18 | 100 | 64 | R |
| E11¹⁾ | C4 | Ru^{d)} | EOP | 0.25 | 200 | EtOH | 80 | 16 | 100 | 66 | S |
| E12 | C5 | Fizz | KEPL | 0.1 | 25 | EtOH | 20 | 14 | 100 | 91 | S |
| E13 | C5 | Rh^{a)} | MAA | 0.36 | 100 | THF | 1 | 2 | 100 | 90 | S |
| E14 | C6 | Ir^{c)} | KEPL | 0.1 | 25 | EtOH | 20 | 14 | 100 | 90 | S |
| E15 | C7 | Rh^{a)} | MAC | 0.1 | 25 | EtOH | 1 | 2 | 100 | 99.0 | S |
| E16 | C7 | Rh^{a)} | MAA | 0.36 | 100 | EtOH | 1 | 2 | 100 | 99.0 | S |
| E17 | C7 | Rh^{a)} | DMI | 0.36 | 100 | EtOH | 1 | 2 | 100 | 99.1 | R |
| E18 | C7 | Rh^{a)} | Z-EAAC | 0.36 | 100 | THF³⁾ | 1 | 2 | 100 | 90 | R |
| E19 | C8 | Rh^{a)} | MAC | 0.1 | 25 | EtOH | 1 | 2 | 100 | 99.6 | S |
| E20 | C8 | Rh^{a)} | MAA | 0.1 | 25 | EtOH | 1 | 2 | 100 | 98.8 | S |
| E21 | C8 | Rh^{a)} | DMI | 0.36 | 100 | EtOH | 1 | 2 | 100 | 99.1 | R |
| E22 | C9a | Rh^{a)} | DMI | 0.25 | 200 | MeOH | 1 | 1 | 15 | 28.5 | R |
| E23 | C9b | Rh^{a)} | DMI | 0.25 | 200 | MeOH | 1 | 1 | 100 | 99.0 | R |

Additions: ¹⁾ 1 N HCl (1.2% by volume); ²⁾ 2 equivalents of tetrabutylammonium iodide/mole of Ir and CF₃COOH (0.6% by volume); ³⁾ reaction in presence of 10% CF₃-CH₂-OH (by volume).

In Example No. 11, the temperature is 80°C, otherwise 25°C.

Abbreviations used here:

[S] is molar substrate concentration; S/C is substrate/catalyst ratio; t is hydrogenation time; Solv. is solvent (MeOH = methanol; EtOH = ethanol; Tol = toluene; THF = tetrahydrofuran; DCE = 1,2-dichloroethane); metal: metal precursors used in the hydrogenations: Rh^{a)} =[Rh(norbornadiene)₂]BF₄; Rh^{b)} =[Rh(cyclooctadiene)Cl]₂; Ir^{c)}= [Ir(cyclooctadiene)CI]₂; Ru^{d)}= [Rul₂(p-cymene)]₂; C = conversion; Conf. = configuration. P = hydrogen pressure (bar).

## Claims

1. Compounds of the formulae I and la in the form of mixtures of diastereomers or pure diastereomers, 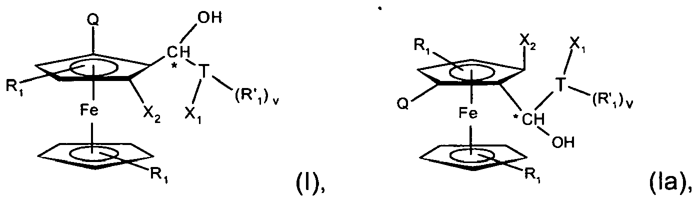 where
R₁ is a hydrogen atom or C₁-C₄-alkyl and R'₁ is C₁-C₄-alkyl;
X₁ and X₂ are each, independently of one another, a sec-phosphino group;
T is C₆-C₂₀-aryiene or C₄-C₁₈-heteroarylene having heteroatoms selected from the group consisting of O, S, -N= and N(C₁-C₄-alkyl);
v is 0 or an integer from 1 to 4;
X₁ is bound in the ortho position relative to the T-C* bond;
Q is vinyl, methyl, ethyl, -CH₂-OR, -CH₂-N(C₁-C₄-alkyl)₂ or a C- or S-bonded chiral group which directs metals of metallation reagents into the ortho position;
R is hydrogen, a silyl radical or an aliphatic, cycloaliphatic, aromatic or aromatic-aliphatic hydrocarbon radical which has from 1 to 18 carbon atoms and is unsubstituted or substituted by C₁-C₄-alkyl, C₁-C₄-alkoxy, F or CF₃; and
* denotes a mixture of diastereomers or pure diastereomers.

2. Compounds according to Claim 1, **characterized in that** the compounds are compounds of the formula Ib or Ic, 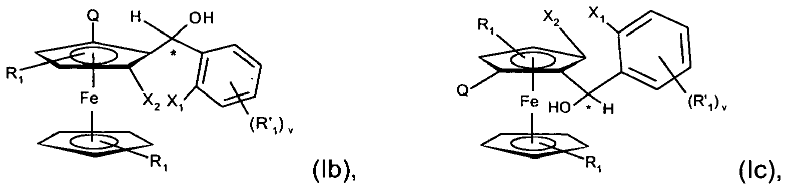 where Q, R₁, R'₁, X₁, X₂ and v and also * have the meanings given in Claim 1.

3. Compounds according to Claim 1, **characterized in that** sec-phosphino radicals X₁ and X₂ are, independently of one another, acyclic sec-phosphino selected from the group consisting of -P(C₁-C₆-alkyl)₂, -P(C₅-C₈-cycloalkyl)₂, -P(C₇-C₈-bicycloalkyl)₂, -P(o-furyl)₂, -P(C₆H₅)₂, -P[2-(C₁-C₆-alkyl)C₆H₄]₂, -P[3-(C₁-C₆-alkyl)C₆H₄]₂, -P[4-(C₁-C₆-alkyl)C₆H₄]₂, -P[2-(C₁-C₆-alkoxy)C₆H₄]₂, -P[3-(C₁-C₆-alkoxy)C₆H₄]₂, -P[4-(C₁-C₆-alkoxy)C₆H₄]₂, -P[2-(trifluoromethyl)C₆H₄]₂, -P[3-(tifluoromethyl)C₆H₄]₂, -P[4-(trifluoromethyl)C₆H₄]₂, -P[3,5-bis(tifluoromethyl)C₆H₃]₂, -P[3,5-bis(C₁-C₆-alkyl)₂C₆H₃]₂, -P[3,5-bis(C₁-C₆-alkoxy)₂C₆H₃]₂ and -P[3,5-bis(C₁-C₆-alkyl)₂-4-(C₁-C₆-alkoxy)C₆H₂]₂, or a cyclic phosphino group selected from the group consisting of 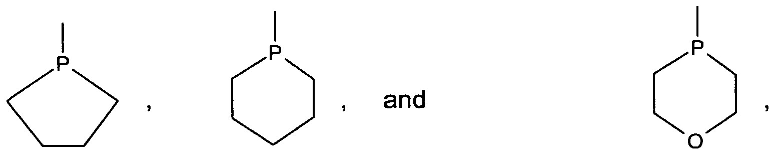 which are unsubstituted or substituted by one or more C₁-C₄-alkyl, C₁-C₄-alkoxy, C₁-C₄-alkoxy-C₁-C₂-alkyl, phenyl, benzyl, benzyloxy or C₁-C₄-alkylidenedioxyl radicals.

4. Compounds according to Claim 1, **characterized in that** the group Q corresponds to the formula -HC*R₅R₆, where R₅ is C₁-C₈-alkyl, C₅-C₈-cycloalkyl, phenyl or benzyl, R₆ is -OR₇ or -NR₈R₉, R₇ is C₁-C₈-alkyl, C₅-C₈-cydoalkyl, phenyl or benzyl and R₈ and R₉ are identical or different and are each C₁-C₈-alkyl, C₅-C₈-cycloalkyl, phenyl or benzyl or R₈ and R₉ together with the N atom form a five- to eight-membered N-heterocyclic ring.

5. Compounds according to Claim 4, **characterized in that** R₅ is C₁-C₄-alkyl or phenyl, R₇ is C₁-C₄-alkyl, R₈ and R₉ are identical radicals and are each C₁-C₄-alkyl or together form tetramethylene, pentamethylene or 3-oxa-1,5-pentylene.

6. Process for preparing compounds according to the invention of the formulae I and la, which comprises the steps:
a) reaction of a compound of the formula II, IIa or a mixture thereof, 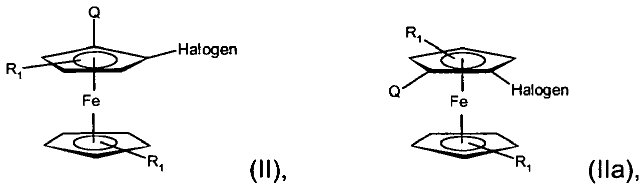 where
Q and R₁ have the meanings given in Claim 1 with the exception of Q = - CH₂OH and halogen is bromine or iodine, with at least equivalent amounts of an aliphatic Li sec-amide or a halogen-Mg sec-amide to form a compound of the formula III, IIIa or a mixture thereof, 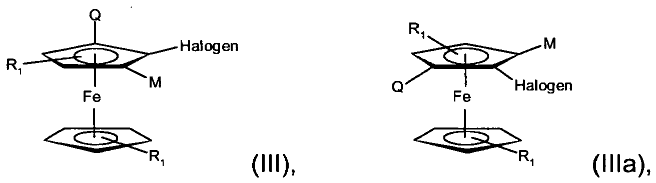 where M is Li or -MgX₃ and X₃ is Cl, Br or I;
b) reaction of a compound of the formula III or IIIa with a compound of the formula X₂-Halo, where Halo is Cl, Br or I, to introduce the group X₂ and form a compound of the formula IV or IVa; 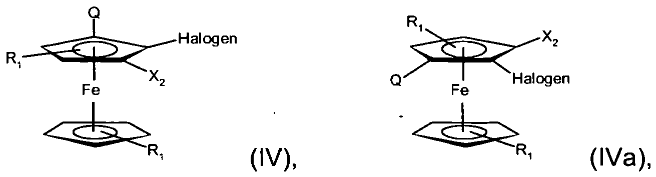
c) introduction of the group -(CH(OH)-T(R'₁)ᵥ-X₁ by reaction of a compound of the formula IV or IVa with at least equivalent amounts of alkyllithium or a magnesium Grignard compound and then with at least equivalent amounts of
c1) an α-sec-phosphinobenzaldehyde of the formula 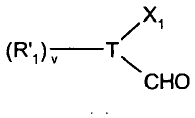 or
c2) firstly with a dialkylformamide to form a ferrocenealdehyde of the formula V or
Va 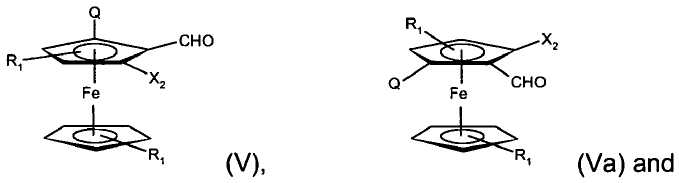 then with an organometallic compound of the formula 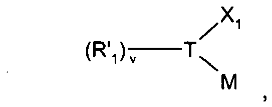 where R'₁, X₁, T, M and v have the meanings given in Claim 1 and M is bound in the ortho position relative to X₁ to give a compound of the formula I or la; and
d) to prepare compounds in which Q is -CH₂OH, derivatization of the -CH₂OR group.

7. Compounds of the formulae V and Va 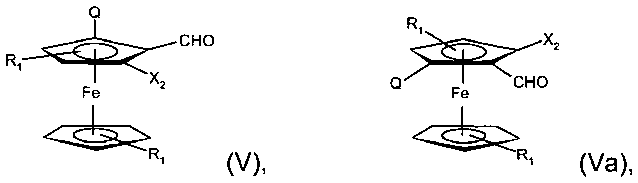 where R₁, X₂ and Q have the meanings given in Claim 1, with the exception of 1-[(dimethylamino)eth-1-yl]-2-formyl-3(diphenylphosphino)ferrocene of the formula

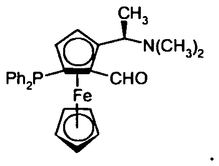

8. Complexes of metals selected from the group of transition metals Fe, Co, Ni, Cu, Ag, Au, Ru, Rh, Pd, Os and Ir, with one of the compounds of the formula I and/or la as a ligand.

9. Process for preparing chiral organic compounds by asymmetric addition of hydrogen onto a carbon-carbon or carbon-heteroatom double bond in prochiral organic compounds in the presence of a catalyst, which is **characterized in that** the addition reaction is carried out in the presence of catalytic amounts of at least one metal complex according to Claim 8.

10. Use of the metal complexes according to Claim 8 as homogeneous catalysts for the preparation of chiral organic compounds, preferably for the asymmetric addition of hydrogen onto a carbon-carbon or carbon-heteroatom double bond in prochiral organic compounds.

## Patentansprüche

1. Verbindungen der Formeln I und la in Form von Gemischen von Diastereomeren oder reinen Diastereomeren, 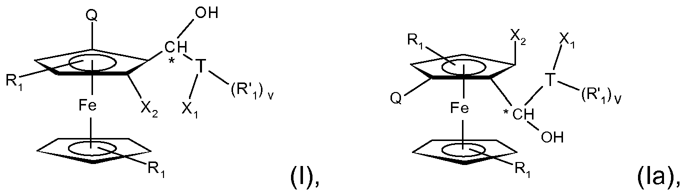 worin
R₁ ein Wasserstoffatom oder C₁-C₄-Alkyl und R'₁ C₁-C₄-Alkyl bedeuten;
X₁ und X₂ unabhängig voneinander eine Sekundärphosphingruppe darstellen;
T für C₆-C₂₀-Arylen oder C₄-C₁₈-Heteroarylen steht, mit Heteroatomen ausgewählt aus der Gruppe O, S, -N= und N(C₁-C₄-Alkyl),
v für 0 oder eine ganze Zahl von 1 bis 4 steht;
X₁ in Orthostellung zur Bindung T-C* gebunden ist;
Q Vinyl, Methyl, Ethyl, -CH₂-OR, -CH₂-N(C₁-C₄-Alkyl)₂, oder eine C- oder S-gebundene, Metalle von Metallierungsreagenzien in die Orthostellung dirigierende, chirale Gruppe darstellt;
R Wasserstoff, einen Silylrest, oder einen aliphatischen, cycloaliphatischen, aromatischen oder aromatisch-aliphatischen Kohlenwasserstoffrest mit 1 bis 18 C-Atomen bedeutet, der unsubstituiert oder mit C₁-C₄-Alkyl, C₁-C₄-Alkoxy, F oder CF₃ substituiert ist; und
* für ein Gemisch von Diastereomeren oder reine Diastereomere steht.

2. Verbindungen gemäss Anspruch 1, **dadurch gekennzeichnet, dass** es sich bei den Verbindungen um solche der Formeln Ib oder Ic handelt, 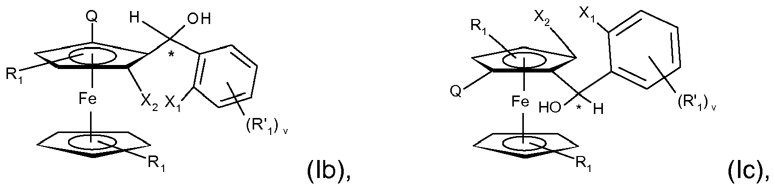 worin Q, R₁, R'₁, X₁, X₂ und v sowie die in Anspruch 1 angegebenen Bedeutungen haben.

3. Verbindungen gemäss Anspruch 1, **dadurch gekennzeichnet, dass** X₁ und X₂ als Sekundärphosphino unabhängig voneinander nicht-zyklisches Sekundärphosphin ausgewählt aus der Gruppe -P(C₁-C₆-Alkyl)₂, -P(C₅-C₈-Cycloalkyl)₂, -P(C₇-C₈-Bicycloalkyl)₂, -P(o-Furyl)₂, -P(C₆H₅)₂, -P[2-(C₁-C₆-Alkyl)C₆H₄]₂, -P[3-(C₁-C₆-Alkyl)C₆H₄]₂, -P[4-(C₁-C₆-Alkyl)C₆H₄]₂, -P[2-(C₁-C₆-Alkoxy)C₆H₄]₂, -P[3-(C₁-C₆-Alkoxy)C₆H₄]₂, -P[4-(C₁-C₆-Alkoxy)C₆H₄]₂, -P[2-(Trifluormethyl)C₆H₄]₂, -P[3-(Trifluormethyl)C₆H₄]₂, -P[4-(Trifluormethyl)C₆H₄]₂, -P[3,5-Bis(trifluormethyl)C₆H₃]₂, -P[3,5-Bis(C₁-C₆-Alkyl)₂C₆H₃]₂, -P[3,5-Bis(C₁-C₆-Alkoxy)₂C₆H₃]₂, und -P[3,5-Bis(C₁-C₆-Alkyl)₂-4-(C₁-C₆-Alkoxy)C₆H₂]₂, oder ein zyklisches Phosphin, ausgewählt aus der Gruppe 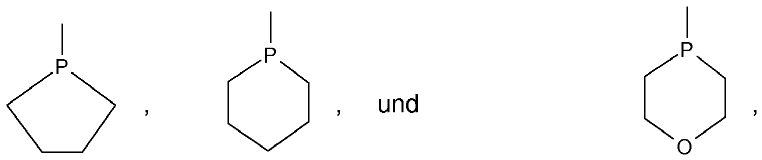 die unsubstituiert oder ein- oder mehrfach substituiert sind mit C₁-C₄-Alkyl, C₁-C₄-Alkoxy, C₁-C₄-Alkoxy-C₁-C₂-Alkyl, Phenyl, Benzyl, Benzyloxy, oder C₁-C₄-Alkyliden-dioxyl bedeuten.

4. Verbindungen gemäss Anspruch 1, **dadurch gekennzeichnet, dass** die Gruppe Q der Formel -HC*R₅R₆ entspricht, worin R₅ C₁-C₈-Alkyl, C₅-C₈-Cycloalkyl, Phenyl oder Benzyl darstellt, R₆ für -OR₇ oder -NR₈R₉ steht, R₇ C₁-C₈-Alkyl, C₅-C₈-Cycloalkyl, Phenyl oder Benzyl bedeutet, und R₈ und R₉ gleich oder verschieden sind und C₁-C₈-Alkyl, C₅-C₈-Cycloalkyl Phenyl oder Benzyl darstellen oder R₈ und R₉ zusammen mit dem N-Atom einen fünf- bis achtgliedrigen N-heterozyklischen Ring bilden.

5. Verbindungen gemäss Anspruch 4, **dadurch gekennzeichnet, dass** R₅ C₁-C₄-Alkyl oder Phenyl ist, R₇ C₁-C₄-Alkyl bedeutet, R₈ und R₉ gleiche Reste bedeuten und C₁-C₄-Alkyl oder zusammen Tetramethylen, Pentamethylen oder 3-Oxa-1,5-pentylen darstellen.

6. Verfahren zur Herstellung von erfindungsgemässen Verbindungen der Formeln I und la, umfassend die Schritte:
a) Umsetzung einer Verbindung der Formeln II, IIa oder Gemischen davon, 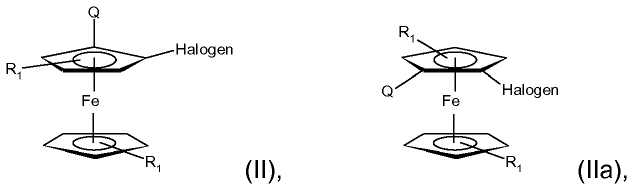 worin
Q und R₁ die in Anspruch 1 angegebenen Bedeutungen haben mit Ausnahme von Q ist -CH₂OH, und Halogen für Brom oder Iod steht, mit wenigstens äquivalenten Mengen eines aliphatischen Li-Sekundäramides oder eines Halogen-Mg-Sekundäramides zu Verbindungen der Formel III, IIIa oder Gemischen davon, 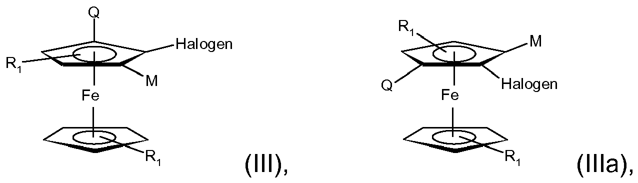 worin M für Li oder -MgX₃ steht und X₃ Cl, Br oder I bedeutet;
b) Umsetzung einer Verbindung der Formeln III oder IIIa mit einer Verbindung der Formel X₂-Halo, worin Halo für Cl, Br oder I steht, zu einer Verbindung der Formel IV oder IVa zur Einführung der Gruppe X₂; 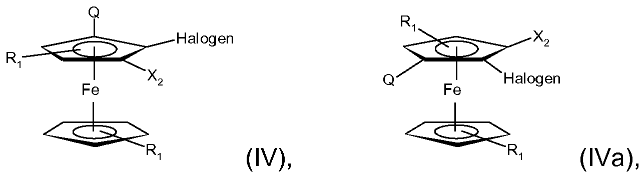
c) Einführung der Gruppe -(CH(OH)-T(R'₁)ᵥ-X₁ durch Umsetzung von Verbindungen der Formel IV oder IVa mit wenigstens äquivalenten Mengen Lithiumalkyl oder einer Magnesium-Grignardverbindung und dann mit wenigstens äquivalenten Mengen
c1) eines α-Sekundärphosphinobenzaldehyds der Formel 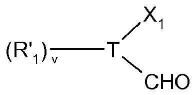 oder
c2) zunächst mit einem Dialkylformamid zu einem Ferrocenaldehyd der Formeln V oder Va 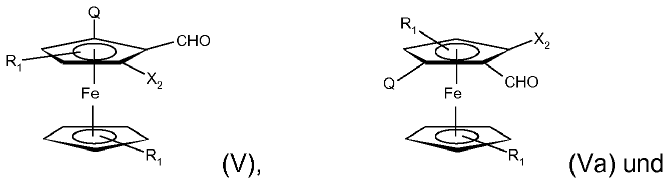 dann mit einer metallorganischen Verbindung der Formel 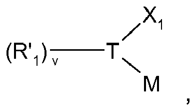 worin R'₁, X₁, T, M und v die in Anspruch 1 angegebenen Bedeutungen haben, und M in Orthostellung zu X₁ gebunden ist, und
d) zur Herstellung von Verbindungen mit Q ist -CH₂OH die Bildung eines Derivates der Gruppe -CH₂OR.

7. Verbindungen der Formeln V und Va 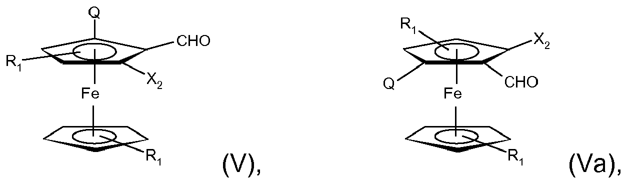 worin R₁, X₂ und Q die in Anspruch 1 angegebenen Bedeutungen haben, mit Ausnahme von 1-[(Dimethylamino)eth-1-yl]-2-formyl-3(diphenylphosphino)-ferrocen der Formel

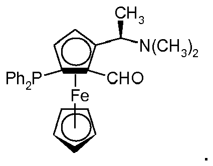

8. Metallkomplexe von Metallen ausgewählt aus der Gruppe von Übergangsmetallen, bevorzugt TM8-Metallen oder TM9-Metallen, mit einer der Verbindungen der Formel I und/oder la als Liganden.

9. Verfahren zur Herstellung chiraler organischer Verbindungen durch asymmetrische Anlagerung von Wasserstoff an eine Kohlenstoff- oder Kohlenstoff-Heteroatom-Doppelbindung in prochiralen organischen Verbindungen in Gegenwart eines Katalysators, das **dadurch gekennzeichnet ist, dass** man die Anlagerung in Gegenwart katalytischer Mengen wenigstens eines Metallkomplexes gemäss Anspruch 8 durchführt.

10. Verwendung der Metallkomplexe gemäss Anspruch 8 als homogene Katalysatoren zur Herstellung chiraler organischer Verbindungen, bevorzugt zur asymmetrischen Anlagerung von Wasserstoff an eine Kohlenstoff- oder Kohlenstoff-Heteroatom-Doppelbindung in prochiralen organischen Verbindungen.

## Revendications

1. Composés des formules I est la sous la forme de mélanges de diastéréomères ou de diastéréomères purs 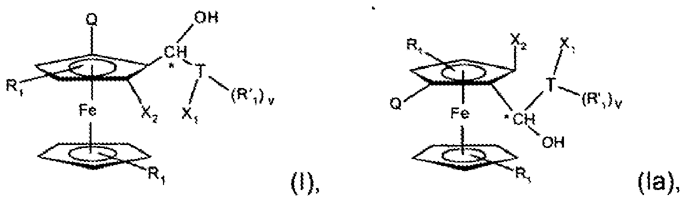 dans lesquelles
R₁ est un atome d'hydrogène ou un alkyle en C₁-C₄ et R'₁ est un alkyle en C₁-C₄ ;
X₁ et X₂ sont chacun, indépendamment l'un de l'autre, un groupe sec-phosphino ;
T est un arylène en C₆-C₂₀ ou un hétéroarylène en C₄-C₁₈ contenant des hétéroatomes choisis dans le groupe constitué par O, S, -N= et N(alkyle en C₁-C₄) ; v est 0 ou un entier de 1 à 4 ;
X₁ est relié en position ortho par rapport à la liaison T-C* ;
Q est vinyle, méthyle, éthyle, -CH₂-OR, -CH₂-N(alkyle en C₁-C₄)₂ ou un groupe chiral relié à C ou S qui dirige des métaux de réactifs de métallation en position ortho ;
R est l'hydrogène, un radical silyle ou un radical hydrocarboné aliphatique, cycloaliphatique, aromatique ou aromatique-aliphatique qui contient de 1 à 18 atomes de carbone et est non substitué ou substitué par alkyle en C₁-C₄, alcoxy en C₁-C₄, F ou CF₃ ; et
* représente un mélange de diastéréomères ou de diastéréomères purs.

2. Composés selon la revendication 1, **caractérisés en ce que** les composés sont des composés de formule Ib ou Ic 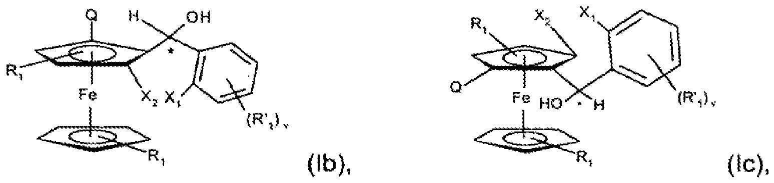 dans lesquels Q, R₁, R'₁, X₁, X₂ et v et également * ont les significations données dans la revendication 1.

3. Composés selon la revendication 1, **caractérisés en ce que** les radicaux sec-phosphino X₁ et X₂ sont, indépendamment l'un de l'autre, un sec-phosphino acyclique choisi dans le groupe constitué par -P(alkyle en C₁-C₆)₂, -P(cycloalkyle en C₅-C₈)₂, -P(bicycloalkyle en C₇-C₈)₂, -P(o-furyl)₂, -P(C₆H₅)₂, -P[2-(alkyle en C₁-C₆)C₆H₄]₂, -P[3-(alkyle en C₁-C₆)C₆H₄]₂, -P[4-(alkyle en C₁-C₆)C₆H₄]₂, -P[2-(alcoxy en C₁-C₆)C₆H₄]₂, -P[3-(alcoxy en C₁-C₆)C₆H₄]₂, -P[4-(alcoxy en C₁-C₆)C₆H₄]₂, -P[2-(trifluorométhyle)C₆H₄]₂, -P[3-(trifluorométhyle)C₆H₄]₂, -P[4-(trifluorométhyle)C₆H₄]₂, -P[3,5-bis(trifluorométhyle)C₆H₃]₂, -P[3,5-bis(alkyle en C₁-C₆)₂C₆H₃]₂, -P[3,5-bis(alcoxy en C₁-C₆)₂C₆H₃]₂ et -P[3,5-bis(alkyle en C₁-C₆)₂-4-(alcoxy en C₁-C₆)C₆H₂]₂, ou un groupe phosphino cyclique choisi dans le groupe constitué par 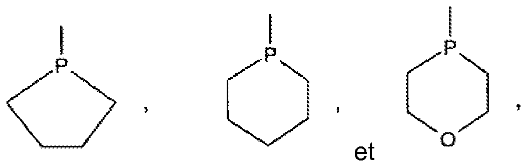 qui sont non substitués ou substitués par un ou plusieurs radicaux alkyle en C₁-C₄, alcoxy en C₁-C₄, alcoxy en C₁-C₄-alkyle en C₁-C₂, phényle, benzyle, benzyloxy ou alkylidènedioxyle en C₁-C₄.

4. Composés selon la revendication 1, **caractérisés en ce que** le groupe Q correspond à la formule -HC*R₅R₆, R₅ étant un alkyle en C₁-C₈, un cycloalkyle en C₅-C₈, un phényle ou un benzyle, R₆ étant -OR₇ ou -NR₈R₉, R₇ étant un alkyle en C₁-C₈, un cycloalkyle en C₅-C₈, un phényle ou un benzyle, et R₈ et R₉ étant identiques ou différents et étant chacun un alkyle en C₁-C₈, un cycloalkyle en C₅-C₈, un phényle ou un benzyle, ou R₈ et R₉ formant ensemble avec l'atome N un cycle N-hétérocyclique de cinq à huit éléments.

5. Composés selon la revendication 4, **caractérisés en ce que** R₅ est un alkyle en C₁-C₄ ou un phényle, R₇ est un alkyle en C₁-C₄, R₈ et R₉ sont des radicaux identiques et sont chacun un alkyle en C₁-C₄ ou forment ensemble le tétraméthylène, le pentaméthylène ou le 3-oxa-1,5-pentylène.

6. Procédé de préparation de composés selon l'invention des formules I est la, qui comprend les étapes suivantes :
a) la mise en réaction d'un composé de formule II, IIa ou un de leurs mélanges 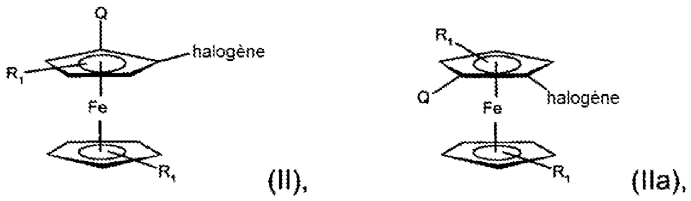 dans lesquelles
Q et R₁ ont les significations données dans la revendication 1, à l'exception de Q = -CH₂OH, et halogène est brome ou iode, avec au moins des quantités équivalentes d'un sec-amide de Li aliphatique ou d'un sec-amide d'halogène-Mg pour former un composé de formule III, IIIa ou un de leurs mélanges 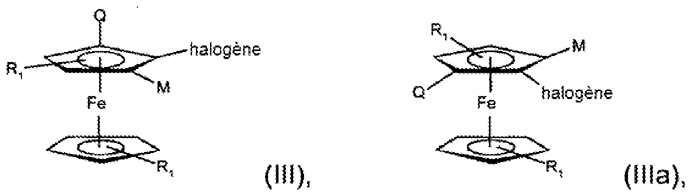 dans lesquelles M est Li ou -MgX₃ et X₃ est CI, Br ou I ;
b) la mise en réaction d'un composé de formule III ou IIIa avec un composé de formule X₂-halo, halo étant CI, Br ou I, pour introduire le groupe X₂ et former un composé de formule IV ou IVa ; 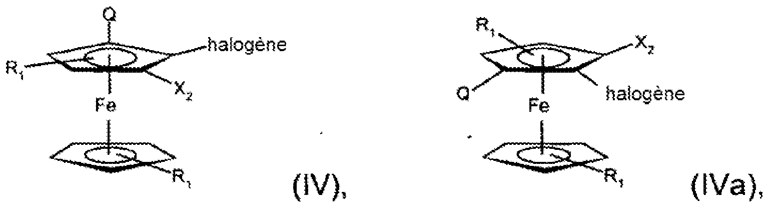
c) l'introduction du groupe -(CH(OH)-T(R'₁)ᵥ-X₁ par mise en réaction d'un composé de formule IV ou IVa avec au moins des quantités équivalentes d'alkyllithium ou d'un composé de Grignard de magnésium, puis avec au moins des quantités équivalentes de
c1) un α-sec-phosphinobenzaldéhyde de formule 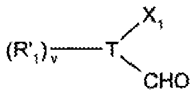 ou
c2) tout d'abord avec un dialkylformamide pour former un ferrocène aldéhyde de formule V ou Va 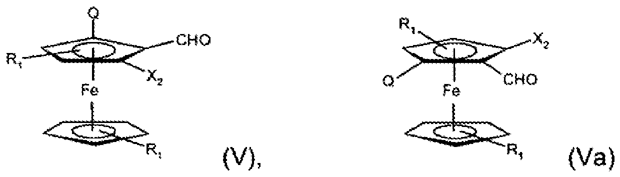 puis avec un composé organométallique de formule 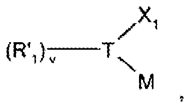 dans laquelle R'₁, X₁, T, M et v ont les significations données dans la revendication 1 et M est relié en position ortho par rapport à X₁ pour obtenir un composé de formule I ou la ; et
d) pour préparer des composés dans lesquels Q est -CH₂OH, la dérivatisation du groupe -CH₂OR.

7. Composés de formules V et Va 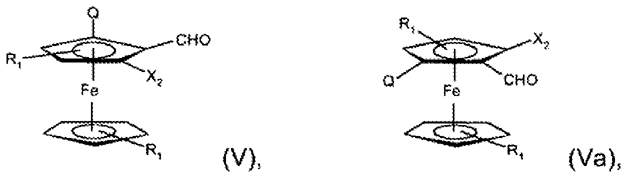 dans lesquelles R₁, X₂ et Q ont les significations données dans la revendication 1, à l'exception du 1-[(diméthylamino)éth-1-yl]-2-formyl-3(diphénylphosphino)ferrocène de formule

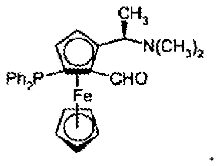

8. Complexes de métaux choisis dans le groupe des métaux de transition Fe, Co, Ni, Cu, Ag, Au, Ru, Rh, Pd, Os et Ir, avec un des composés de formule I et/ou la en tant que ligand.

9. Procédé de préparation de composés organiques chiraux par addition asymétrique d'hydrogène sur une double liaison carbone-carbone ou carbone-hétéroatome dans des composés organique prochiraux en présence d'un catalyseur, qui est **caractérisé en ce que** la réaction d'addition est réalisée en présence de quantités catalytiques d'au moins un complexe métallique selon la revendication 8.

10. Utilisation des complexes métalliques selon la revendication 8 en tant que catalyseurs homogènes pour la préparation de composés organiques chiraux, de préférence pour l'addition asymétrique d'hydrogène sur une double liaison carbone-carbone ou carbone-hétéroatome dans des composés organiques prochiraux.
